# EUROPÄISCHE PATENTSCHRIFT

(11) **EP 3 838 979 B1**
(45) Veröffentlichungstag und Bekanntmachung des Hinweises auf die Patenterteilung: **26.06.2024**
(21) Anmeldenummer: 19216896.1
(22) Anmeldetag: 17.12.2019
(51) Int. Cl.: C08K 5/1515, C08K 5/42

(54) **SCHMELZEPOLYCARBONAT MIT VERBESSERTEN OPTISCHEN EIGENSCHAFTEN**
MELT POLYCARBONATE WITH IMPROVED OPTICAL PROPERTIES
POLYCARBONATE FUSIBLE AUX PROPRIÉTÉS OPTIQUES AMÉLIORÉES

(43) Veröffentlichungstag der Anmeldung: 23.06.2021
(73) Patentinhaber: Covestro Deutschland AG, 51373 Leverkusen (DE)
(72) Erfinder: WEHRMANN, Rolf, 47800 Krefeld (DE); HEUER, Helmut Werner, 57074 Siegen (DE); BOUMANS, Anke, 47551 Bedburg-Hau (DE)
(74) Vertreter: Levpat

(56) Entgegenhaltungen:
- WO-A1-2014/054710
- US-A- 3 839 247
- US-A- 5 663 280
- DATABASE CA [Online] CHEMICAL ABSTRACTS SERVICE, COLUMBUS, OHIO, US; MUKAI, ATSUHIKO ET AL: "Modified polycarbonate", XP002798939, gefunden im STN Database accession no. 1974:71625

## Beschreibung

Die vorliegende Erfindung betrifft die Erhöhung der Transmission von auf Schmelzepolycarbonat basierenden, transparente Zusammensetzungen.

Polycarbonat kann über verschiedene Prozesse hergestellt werden. Großtechnische Bedeutung erlangte zunächst das in Lösung über das Phasengrenzflächenverfahren aus Bisphenolen und Phosgen hergestellte Polycarbonat (LPC). Bei dem heute zunehmend an Bedeutung gewinnendem Umesterungs-Verfahren werden Bisphenole mit organischen Carbonaten in der Schmelze zu sogenanntem Schmelzepolycarbonat (SPC) umgesetzt.

Die Herstellung aromatischer Polycarbonate durch das Schmelzeumesterungsverfahren ist bekannt und beispielsweise beschrieben in "Schnell, Chemistry and Physics of Polycarbonats", Polymer Reviews, Vol. 9, Interscience Publishers, New York, London, Sydney 1964, in D.C. Prevorsek, B.T. Debona und Y. Kersten, Corporate Research Center, Allied Chemical Corporation, Moristown, New Jersey 07960, in "Synthesis of Poly(ester)carbonate Copolymers" im Journal of Polymer Science, Polymer Chemistry Edition, Vol. 19, 75-90 (1980), in D. Freitag, U. Grigo, P.R. Müller, N. Nouvertne, BAYER AG, "Polycarbonates" in der "Encyclopedia of Polymere Science and Engineering", Vol. 11, Second Edition, 1988, pages 648-718 und in Dr. U. Grigo, K. Kircher und P.R. Müller, in "Polycarbonate" in "Becker/Braun, Kunststoff-Handbuch [Plastics Handbook], Volume 3/1, Polycarbonate, Polyacetale, Polyester, Celluloseester [Polycarbonates, polyacetals, polyesters, cellulose esters]", Carl Hanser Verlag, München, Wien, 1992, Seiten 117-299.

Verglichen mit Polycarbonaten, die durch Grenzflächenpolykondensation hergestellt wurden, weist das mittels Schmelzprozess hergestellte Polycarbonat, das aus dem Stand der Technik bekannt ist, unter anderem den Nachteil auf, dass der beim Schmelzepolycarbonat im Vergleich zum Phasengrenzflächenverfahren (Lösungsverfahren) verfahrensbedingt erhöhte Y.I. (Yellowness Index) im Zuge von Thermoalterung weiter ansteigt. Dieses ist beispielsweise in JP H 08183847 A beschrieben. Das dort beschriebene Polycarbonat zeigt einen Anstieg des Y.I. eines Spritzgussteils, das aus Schmelzepolycarbonat hergestellt wurde und bei 160°C für 30 Tage (720 Stunden) aufbewahrt wird, von mehr als 14 Y.I.-Einheiten. Es ergibt sich aus dem Dokument nicht, warum sich der Y.I. dermaßen stark verändert. Auch EP 0 622 418 A2 beschreibt eine Verfärbung und nach der Herstellung des Schmelzepolycarbonats zunehmende Vergilbung bei Wärmealterung.

Dieses hängt u.a. damit zusammen, dass Polycarbonate, die nach dem Schmelzepolykondensationsverfahren hergestellt werden, verfahrensbedingt höhere phenolische OH-Werte aufweisen, als Polycarbonate, die nach dem Phasengrenzflächenverfahren gewonnen wurden. Die Konzentration an phenolischen Endgruppen soll so niedrig wie möglich sein, da sie zu unerwünschten Nebenreaktionen führen können, die sich z. B. durch höhere Vergilbung (höherer Y.I.) äußern können. Sie hängt im Schmelzepolykondensationsverfahren u. a. von Druck, Temperatur und Reaktionszeit ab.

Die phenolischen Endgruppen können sich oxidativ miteinander verbinden und dabei Dimer-Produkte bilden oder selbst Degradationsprozesse durchlaufen, deren Reaktionsprodukte ebenfalls nicht stabil sind und weitere Reaktionen eingehen. Hieraus resultiert eine Vergilbung des Polycarbonats, die unerwünscht ist. Derartige Vergilbungsprozesse können bereits während der Verarbeitung beim Spritzgießer auftreten.

Aus dem Stand der Technik ergibt sich somit, dass Schmelzepolycarbonat verfahrensbedingt häufig schlechtere optische Eigenschaften, speziell einen höheren Y.I. und damit häufig verbunden eine geringe Transmission, aufweist als solches, das durch Grenzflächenpolykondensation hergestellt wurde.

Aufgabe der vorliegenden Erfindung war es, die optischen Eigenschaften von transparentem Schmelzepolycarbonat (SPC) zu verbessern, insbesondere durch eine Erhöhung der Transmission, möglichst auch durch Reduktion des Yellowness Index (Y.I.). Dabei sollten die Kerneigenschaften des Polycarbonates wie Zähigkeit und ggf. auch Flammwidrigkeit, möglichst erhalten bleiben.

Überraschenderweise wurde gefunden, dass epoxidiertes Sojabohnenöl (ESBO) die Transmission von Schmelzepolycarbonat sowie überwiegend auch den Y.I. verbessert. Dabei bleiben Zähigkeit und auch Flammwidrigkeit auf hohem Niveau. Gleichzeitig ist zudem eine Erniedrigung der Schmelzeviskositäten zu beobachten, was die Verarbeitbarkeit der Compounds erleichtert.

Gegenstand der Erfindung ist daher die Verwendung von epoxidiertem Triacylglycerol zur Eihöhung der Transmission, bestimmt nach DIN EN ISO 13468-2:2006 bei einer Schichtdicke von 4 mm, einer transparenten thermoplastischen Zusammensetzung auf Basis von aromatischem Schmelzepolycarbonat.

Die transparenten thermoplastischen Zusammensetzungen enthalten nach Zugabe des epoxidierten Triacylglycerols bevorzugt
A) 50,0 Gew.-% bis 99,95 Gew.-% aromatisches Schmelzepolycarbonat,
B) 0,05 Gew.-% bis 10,0 Gew.-% epoxidiertes Triacylglycerol, bevorzugt in die Zusammensetzung eingebracht in Form von epoxidiertem Sojabohnenöl.

Weiter bevorzugt enthalten die Zusammensetzungen
A) 77,0 bis 99,9 Gew.-% aromatisches Schmelzepolycarbonat,
B) 0,1 bis 1,0 Gew.-% epoxidiertes Triacylglycerol, insbesondere in die Zusammensetzung eingebracht in Form von epoxidiertem Sojabohnenöl,
C1) 0 bis 0,065 Gew.-% mindestens eines Alkali-, Erdalkali- und/oder Ammoniumsalzes eines aliphatischen oder aromatischen Sulfonsäure-, Sulfonamid- oder Sulfonimidderivates,
C2) 0 bis 2,0 Gew.-% eines Entformungsmittels,
C3) 0 bis 1,0 Gew.-% eines UV-Absorbers
D) 0 bis 0,05 Gew.-% Triisooctylphosphat und
E) ggf. von den Komponenten B, C1, C2, C3 und D verschiedene, weitere Additive.

Unter "Derivaten" werden erfindungsgemäß solche Verbindungen verstanden, deren Molekülstruktur an der Stelle eines H-Atoms oder einer funktionellen Gruppe ein anderes Atom oder eine andere Atomgruppe besitzt bzw. bei denen ein oder mehrere Atome/Atomgruppen entfernt wurden. Die Stammverbindung ist somit noch weiterhin erkennbar.

Besonders bevorzugt enthalten die Zusammensetzungen
A) 90,0 bis 99,9 Gew.-% aromatisches Schmelzepolycarbonat,
B) 0,1 bis 1,0 Gew.-% epoxidiertes Triacylglycerol, insbesondere in die Zusammensetzung eingebracht in Form von epoxidiertem Sojabohnenöl,
C1) 0 bis 0,065 Gew.-% mindestens eines Alkali-, Erdalkali- und/oder Ammoniumsalzes eines aliphatischen oder aromatischen Sulfonsäure-, Sulfonamid- oder Sulfonimidderivates,
C2) 0 bis 1,0 Gew.-% eines Entformungsmittels,
C3) 0 bis 0,4 Gew.-% eines UV-Absorbers
D) 0 bis 0,05 Gew.-% Triisooctylphosphat und
E) ggf. von den Komponenten B, C1, C2, C3 und D verschiedene, weitere Additive.

Ganz besonders bevorzugt ist mindestens Kaliumperfluor-1-butansulfonat enthalten.

Äußerst bevorzugt enthalten die vorbeschriebenen Zusammensetzungen keine weiteren Komponenten, sondern die Mengen der Komponenten A, B- ggf. B1 (epoxidiertes Sojabohnenöl, enthaltend epoxidiertes Triacylglycerol) -, jeweils ggf. C1, C2, C3, D und/oder E, insbesondere in den vorbeschriebenen bevorzugten Ausfuhrungsformen, ergänzen sich zu 100 Gew.-%.

Im Rahmen der vorliegenden Erfindung beziehen sich die angegebenen Gew.-% der Komponenten A, B, C - bzw. C1- und ggf. D und/oder E - soweit nicht explizit anders angegeben - jeweils auf das Gesamtgewicht der Zusammensetzung. Es versteht sich, dass sämtliche in einer sich durch die erfindungsgemäße Verwendung ergebenden Zusammensetzung enthaltenen Komponenten zusammen 100 Gew.-% ergeben. Die Zusammensetzung kann neben den Komponenten A, B, C und D weitere Komponenten, etwa weitere Additive in Form der Komponente E, enthalten. Ebenso kann die Zusammensetzung einen oder mehrere weitere Thermoplasten als Blendpartner enthalten, soweit diese mit den Polycarbonaten verträglich sind und zu transparenten Blends führen. Ganz besonders bevorzugt enthalten die vorbeschriebenen Zusammensetzungen keine weiteren Komponenten, sondern die Mengen der Komponenten A, B, C (bzw. C1) und ggf. D und/oder E, insbesondere in den vorbeschriebenen bevorzugten Ausführungsformen, ergänzen sich zu 100 Gew.-%, d.h. die Zusammensetzungen bestehen aus den Komponenten A, B, C (ggf. C1), ggf. D und/oder E.

Es versteht sich, dass die eingesetzten Komponenten übliche Verunreinigungen, die beispielsweise aus ihrem Herstellungsprozess herrühren, enthalten können. Es ist bevorzugt, möglichst reine Komponenten einzusetzen. Es versteht sich weiterhin, dass diese Verunreinigungen auch bei einer geschlossenen Formulierung der Zusammensetzung enthalten sein können. Sie tragen dann zum jeweiligen Gewichtsanteil der Komponente, von der sie herrühren, bei und sind in diesen einzurechnen.

Die sich durch die erfindungsgemäße Verwendung von epoxidiertem Triacylglycerol ergebenden Zusammensetzungen sind transparent. "Transparent" im Sinne der vorliegenden Erfindung bedeutet eine Transmission Ty, gemessen an einem Prüfkörper bei einer Dicke von 4 mm gemäß ISO 13468-2:2006, von mindestens 85 %, bevorzugt von mindestens 86 %, besonders bevorzugt von mindestens 87 %, noch weiter bevorzugt mindestens 87,5 % und vorzugsweise eine Trübung von weniger als 3,0 %, weiter bevorzugt von weniger als 2,5 %, noch weiter bevorzugt von weniger als 2,0 %, besonders bevorzugt von weniger als 1,0 %, bestimmt nach ASTM D1003:2013 bei einer Schichtdicke von 4 mm.

Die sich durch die erfindungsgemäße Verwendung ergebenden Zusammensetzungen werden vorzugsweise zur Herstellung von Formteilen verwendet. Die Zusammensetzungen weisen bevorzugt eine Schmelze-Volumenfließrate (MVR) von 3 bis 34 cm³/(10 min), weiter bevorzugt von 6 bis 27 cm³/(10 min), besonders bevorzugt von 8 bis 22 cm³/(10 min), ganz besonders bevorzugt von 12 bis 20 cm³/(10 min), bestimmt nach ISO 1133:2012-3 (Prüftemperatur 300°C, Masse 1,2 kg), auf.

Gegenstand der Erfindung ist die Erhöhung der Transmission Ty, bestimmt nach DIN EN ISO 13468-2:2006 bei einer Schichtdicke von 4 mm, einer transparenten thermoplastischen Zusammensetzung auf Basis von aromatischem Schmelzepolycarbonat durch den Zusatz von epoxidiertem Triacylglycerol, insbesondere in Form eines epoxidierten Sojabohnenöls. Die Erhöhung der Transmission bezieht sich auf die entsprechenden Zusammensetzungen ohne epoxidiertes Triacylglycerol, insbesondere in Form eines epoxidiertes Sojabohnenöls, als Vergleichszusammensetzung. Es versteht sich, dass die für die Zusammensetzung als bevorzugt beschriebenen Ausführungsformen für die erfindungsgemäße Verwendung gelten.

Die einzelnen Bestandteile der sich durch die erfindungsgemäße Verwendung ergebenden Zusammensetzungen sind im Folgenden noch näher erläutert:

### Komponente A

Die Zusammensetzungen enthalten als Komponente A 50,0 Gew.-% bis 99,95 Gew.-% aromatisches Polycarbonat. Ein Anteil von mindestens 50,0 Gew.-% aromatischem Polycarbonat an der Gesamtzusammensetzung bedeutet erfindungsgemäß, dass die Zusammensetzung auf aromatischem Polycarbonat basiert. Vorzugsweise beträgt die Menge des aromatischen Polycarbonats in der Zusammensetzung 74,0 bis 99,9 Gew.-%, weiter bevorzugt 77,0 bis 99,9 Gew.-%, noch weiter bevorzugt 78,0 bis 99,8 Gew.-%, besonders bevorzugt 95,0 bis 99,6 Gew.-%, wobei ein einzelnes Polycarbonat oder eine Mischung mehrerer Polycarbonate vorliegen kann.

Unter "Polycarbonat" im erfindungsgemäßen Sinne werden sowohl aromatische Homopolycarbonate als auch aromatische Copolycarbonate verstanden, solange es Schmelzepolycarbonate sind. Dabei können die Polycarbonate in bekannter Weise linear oder verzweigt sein. Erfindungsgemäß können auch Mischungen von Polycarbonaten verwendet werden.

Beim Schmelzepolykondensationsverfahren werden Dihydroxyarylverbindungen mit Diarylcarbonaten bei schrittweiser Erhöhung der Temperatur und Reduktion des Drucks im Reaktor unter Abspaltung des Arylrestes der Diarylcarbonate zu Polycarbonaten umgesetzt.

Die für die Umsetzung mit den Dihydroxyarylverbindungen geeigneten Diarylcarbonate bei der Schmelzeumesterung sind solche der allgemeinen Formel (1) 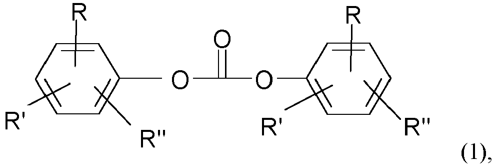 worin
- R, R' und R": jeweils unabhängig voneinander, gleich oder verschieden für Wasserstoff, lineares oder verzweigtes C₁- bis C₃₄-Alkyl, C₇- bis C₃₄-Alkylaryl oder C₆- bis C₃₄-Aryl stehen, R weiterhin auch -COO-R‴ bedeuten kann, wobei R‴ für Wasserstoff, lineares oder verzweigtes C₁- bis C₃₄-Alkyl, C₇- bis C₃₄-Alkylaryl oder C₆- bis C₃₄-Aryl steht.

Bevorzugte Diarylcarbonate sind beispielsweise Diphenylcarbonat, Di-(methylsalicylat)-carbonat, Di-(ethylsalicylat)-carbonat, Di-(n-propylsalicylat)-carbonat, Di-(iso-propylsalicylat)-carbonat, Di-(n-butylsalicylat)-carbonat, Di-(iso-butylsalicylat)-carbonat, Di-(tert-butylsalicylat)-carbonat, Di-(phenylsalicylat)-carbonat und Di-(benzylsalicylat)-carbonat. Besonders bevorzugte Diarylverbindungen sind Diphenylcarbonat und Di-(methylsalicylat)-carbonat. Ganz besonders bevorzugt ist Diphenylcarbonat (DPC).

Es können sowohl ein Diarylcarbonat als auch verschiedene Diarylcarbonate verwendet werden. Die Diarylcarbonate können auch mit Restgehalten der Monohydroxyarylverbindungen, aus denen sie hergestellt wurden, eingesetzt werden. Die Restgehalte der Monohydroxyarylverbindungen können bis zu 20 Gew.-%, vorzugsweise bis zu 10 Gew.-%, besonders bevorzugt bis zu 5 Gew.-% und ganz besonders bevorzugt bis zu 2 Gew.-% betragen.

Bezogen auf die Dihydroxyarylverbindung(en) werden im Allgemeinen 1,02 bis 1,30 Mol des oder der Diarylcarbonat(e), bevorzugt 1,04 bis 1,25 Mol, besonders bevorzugt 1,045 bis 1,22 Mol, ganz besonders bevorzugt 1,05 bis 1,20 Mol, pro Mol Dihydroxyarylverbindung eingesetzt. Es können auch Mischungen der oben genannten Diarylcarbonate eingesetzt werden, wobei die vorangehend aufgeführten Molangaben pro Mol Dihydroxyarylverbindung sich dann auf die Gesamtstoffmenge der Mischung der Diarylcarbonate beziehen.

In der gleichen Weise werden ggf. Verzweiger oder Verzweigermischungen der Synthese zugesetzt. Üblicherweise werden Verzweiger jedoch vor den Kettenabbrechern zugesetzt. In der Regel werden Trisphenole, Quarterphenole oder Säurechloride von Tri- oder Tetracarbonsäuren bzw. deren Anhydride oder Gemische der Polyphenole oder der Säurechloride verwendet. Einige der als Verzweiger geeigneten Verbindungen mit drei oder mehr phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol und Tetra-(4-hydroxyphenyl)-methan. Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Als Katalysatoren können im Schmelzeumesterungsverfahren zur Herstellung von Polycarbonaten die in der Literatur bekannten basischen Katalysatoren wie beispielsweise Alkali- und Erdalkalihydroxyde und -oxyde und/oder Oniumsalze, wie z.B. Ammonium- oder Phosphoniumsalze, eingesetzt werden. Bevorzugt werden bei der Synthese Oniumsalze, besonders bevorzugt Phosphoniumsalze, eingesetzt. Solche Phosphoniumsalze sind beispielsweise solche der allgemeinen Formel (2) 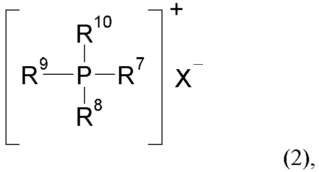 worin
- R⁷⁻¹⁰: für gleiche oder verschiedene, gegebenenfalls substituierte, C₁- bis C₁₀-Alkyl-, C₆- bis C₁₄-Aryl-, C₇- bis C₁₅-Arylalkyl- oder C₅- bis C₆-Cycloalkylreste, bevorzugt für Methyl oder C₆- bis C₁₄-Aryl, besonders bevorzugt Methyl oder Phenyl, stehen und
- X⁻: für ein Anion, ausgewählt aus der Gruppe Hydroxid, Sulfat, Hydrogensulfat, Hydrogencarbonat, Carbonat, Halogenid, bevorzugt Chlorid, Alkylat oder Arylat der Formel -OR¹¹ steht, wobei R¹¹ für einen gegebenenfalls substituierten C₆- bis C₁₄-Aryl-, C₇- bis C₁₅-Arylalkyl- oder C₅- bis C₆-Cycloalkylrest, C₁- bis C₂₀-Alkyl, bevorzugt Phenyl, steht.

Besonders bevorzugte Katalysatoren sind Tetraphenylphosphoniumchlorid, Tetraphenylphosphoniumhydroxid und Tetraphenylphosphoniumphenolat, ganz besonders bevorzugt ist Tetraphenylphosphoniumphenolat.

Die Katalysatoren werden bevorzugt in Mengen von 10⁻⁸ bis 10⁻³ mol, besonders bevorzugt in Mengen von 10⁻⁷ bis 10⁻⁴ mol, bezogen auf ein mol Dihydroxyarylverbindung, eingesetzt.

Es können gegebenenfalls auch Cokatalysatoren verwendet werden, um die Geschwindigkeit der Polykondensation zu erhöhen.

Dies können beispielsweise alkalisch wirkende Salze von Alkalimetallen und Erdalkalimetallen, wie Hydroxide, gegebenenfalls substituierte C₁- bis C₁₀-Alkoxide und C₆- bis C₁₄-Aryloxide von Lithium, Natrium und Kalium, vorzugsweise Hydroxide, gegebenenfalls substituierte C₁- bis C₁₀-Alkoxide oder C₆- bis C₁₄-Aryloxide von Natrium sein. Bevorzugt sind Natriumhydroxid, Natriumphenolat oder das Dinatriumsalz des 2,2-Bis-(4-hydroxyphenyl)-propans.

Falls Alkali- oder Erdalkalimetallionen in Form ihrer Salze zugeführt werden, beträgt die Menge an Alkali- oder Erdalkaliionen, bestimmt z.B. durch Atomabsorptionsspektroskopie, 1 bis 500 ppb, vorzugsweise 5 bis 300 ppb und am meisten bevorzugt 5 bis 200 ppb, bezogen auf das Gesamtgewicht des zu bildenden Polycarbonats. In bevorzugten Ausfiihrungsformen des erfindungsgemäßen Verfahrens werden allerdings keine Alkalisalze verwendet.

Die aromatischen Schmelzepolycarbonate weisen eine oder mehreren Strukturen der allgemeinen Formeln (I) bis (IV) auf 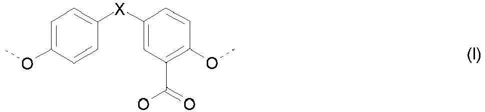 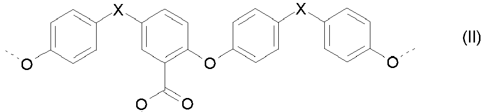 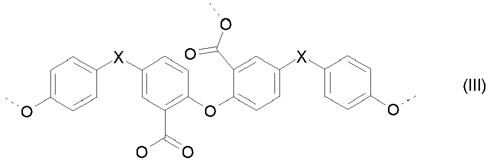 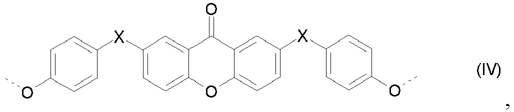
in denen die Phenylringe unabhängig voneinander ein- oder zweifach mit C₁- bis C₈-Alkyl, Halogen wie Chlor oder Brom, bevorzugt C₁- bis C₄-Alkyl, besonders bevorzugt Methyl, substituiert sein können und X für eine Einfachbindung, C₁- bis C₆-Alkylen, C₂- bis Cs-Alkyliden oder C₅- bis C₆- Cycloalkyliden, welches mit C₁- bis C₆-Alkyl substituiert sein kann, steht,
wobei die Menge der Struktureinheiten (I) bis (IV) in Summe 50 bis 900 ppm, bezogen auf das Gesamtgewicht des zugrunde liegenden Polycarbonats, beträgt,
weiterhin enthaltend in Summe lineare und cyclische Oligomere in einer Menge von 0,1 bis 2 Gew.-%, bezogen auf das Gesamtgewicht des aromatischen Schmelzepolycarbonats, wobei die linearen Oligomere solche der Formeln (V) bis (VII) sind 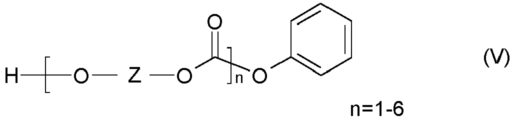 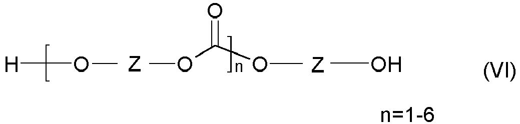 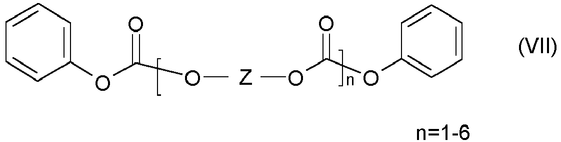
wobei die cyclischen Oligomere solche der allgemeinen Formel (VIII) sind 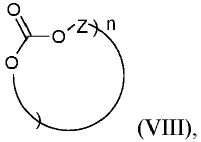 wobei
   n eine ganze Zahl von 2 bis 6 ist und
   Z für einen Rest der Formel (1a) 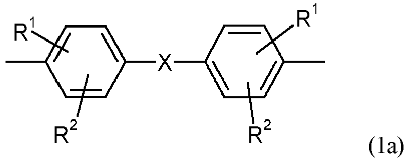
   steht, in der
   R¹ und R² unabhängig voneinander für H, C₁- bis C₈-Alkyl, bevorzugt für H oder C₁- bis C₄-Alkyl, besonders bevorzugt für Wasserstoff oder Methyl, stehen und
   X für eine Einfachbindung, C₁- bis C₆-Alkylen, C₂- bis Cs-Alkyliden oder C₅- bis C₆- Cycloalkyliden, welches mit C₁- bis C₆-Alkyl substituiert sein kann, steht.

Vereinfachend lassen sich die Struktureinheiten der Formeln (I) bis (IV) als Umlagerungsstrukturen bezeichnen. Sie resultieren aus den für die Polycarbonatherstellung eingesetzten Dihydroxyarylverbindungen bzw. Dihydroxyarylverbindungsgemischen. So sind z.B. im Falle von Bisphenol A als Diphenol die Phenylringe der Umlagerungsstrukturen unsubstituiert.

Die in den sich durch die erfindungsgemäße Verwendung ergebenden Polycarbonatzusammensetzungen enthaltenen cyclischen Oligomere der allgemeinen Formel (VIII) sind bevorzugt in Mengen von 0,2 bis 1,2 Gew.-%, besonders bevorzugt 0,2 bis 1,1 Gew.-% und ganz besonders bevorzugt 0,3 bis 1 Gew.-%, bezogen auf das Gesamtgewicht des Polycarbonats, enthalten.

Im Wesentlichen, d.h. zu mehr als 95 %, haben die enthaltenen Cyclen Ringgrößen mit n = 2 bis 6. Bevorzugt treten Ringgrößen mit n = 3 und/oder n = 4, besonders bevorzugt n = 3 auf.

Die sich durch die erfindungsgemäße Verwendung ergebenden Polycarbonatzusammensetzungen enthaltenen linearen Oligomere der allgemeinen Formel (V) bis (VII) sind bevorzugt in Mengen von 0,2 bis 1,2, besonders bevorzugt 0,3 bis 1,1 und ganz besonders bevorzugt 0,4 bis 0,9 Gew.-%, bezogen auf das Gesamtgewicht des Polycarbonats, enthalten.

Die Menge der Oligomeren wird folgendermaßen bestimmt: Nach Lösen in Dichlormethan wird das Polycarbonat mit Aceton umgefällt. Das ausgefallene Polycarbonat wird abfiltriert und das Filtrat wird anschließend bis zur Trockene eingeengt. Der Rückstand wird gelöst und per HPLC mit UV-Detektion analysiert. Die Zuordnung erfolgt durch Vergleich mit einem Standmuster. Die Analyse erfolgt nach der Kurzmethode K0195TSC der Currenta GmbH & Co. KG, Stand November 2019.

Die vorstehend definierten Umlagerungsstrukturen treten in unterschiedlichen Mengen und Verhältnissen zueinander auf. Ihre Menge lässt sich durch Totalverseifung der Polycarbonatzusammensetzung bestimmen. Dieses geschieht, indem nach Totalverseifung des Polycarbonates mit Natriummethylat unter Rückfluß die Probelösung bis zur Trockene eingeengt wird. Der Rückstand wird per HPLC mit UV-Detektion analysiert. Die Zuordnung erfolgt durch Vergleich mit einem Standmuster. Die Analyse erfolgt nach laborinterner Kurzmethode K0190TSC der Currenta GmbH & Co. KG, Stand November 2019. Bei dem Abbau zu Analysezwecken werden die für die jeweilige Umlagerungsstruktur charakteristischen niedermolekularen Abbauprodukte der Formeln (Ia) bis (IVa) gebildet, beispielhaft für Bisphenol A als Diphenol, d.h. X ist Isopropyliden, deren Menge mittels HPLC bestimmt wird, wobei die Phenylringe wie oben bei der Beschreibung der Formeln (I) bis (IV) angegeben substituiert sein können.

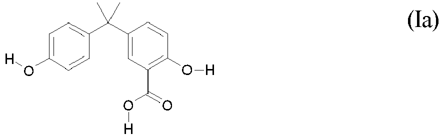

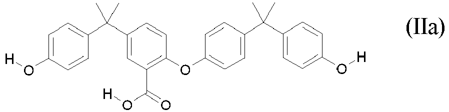

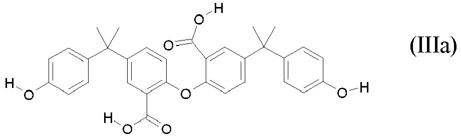

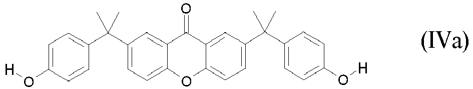

Typischerweise beträgt die Menge der dabei freigesetzten Verbindung der Formel (Ia) 50 bis 800 ppm, bevorzugt von 70 bis 700 ppm, besonders bevorzugt von 100 bis 600 ppm und ganz besonders bevorzugt von 100 bis 550 ppm.

Typischerweise beträgt die Menge der dabei freigesetzten Verbindung der Formel (IIa) 0 (unterhalb der Nachweisgrenze von < 5 ppm) bis 100 ppm, bevorzugt von 0 bis 90 ppm, besonders bevorzugt von 0 bis 80 ppm und ganz besonders bevorzugt von 0 bis 70 ppm.

Typischerweise beträgt die Menge der dabei freigesetzten Verbindung der Formel (IIIa) 0 (unterhalb der Nachweisgrenze von < 5 ppm) bis 60 ppm, bevorzugt von 0 bis 50 ppm, besonders bevorzugt von 5 bis 40 ppm und ganz besonders bevorzugt von 5 bis 30 ppm.

Typischerweise beträgt die Menge der dabei freigesetzten Verbindung der Formel (IVa) 0 (unterhalb der Nachweisgrenze von < 5 ppm) bis 300 ppm, bevorzugt von 5 bis 280 , besonders bevorzugt von 5 bis 270 ppm und ganz besonders bevorzugt von 10 bis 260 ppm.

Aus Gründen der Vereinfachung wird die Menge der Strukturen der Formel (I) bis (IV) mit der Menge der freigesetzten Verbindungen der Formeln (Ia) bis (IVa) gleichgesetzt.

Für die Herstellung der Polycarbonate geeignete Dihydroxyarylverbindungen sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha - alpha '-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Bevorzugte Dihydroxyarylverbindungen sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-phenylethan, 1,3-Bis-[2-(4-hydroxyphenyl)-2-propyl]benzol (Bisphenol M), 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC) sowie die Bisphenole der Formeln (I) bis (III) 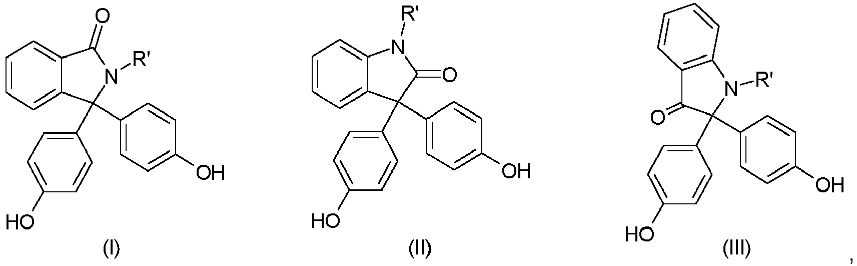 in denen R' jeweils für einen C₁- bis C₄-Alkylrest, Aralkylrest oder Arylrest, bevorzugt für einen Methylrest oder Phenylrest, ganz besonders bevorzugt für einen Methylrest, steht.

Besonders bevorzugte Dihydroxyarylverbindungen sind 4,4'-Dihydroxydiphenyl, 1,1-Bis-(4-hydroxyphenyl)-phenyl-ethan, 2,2-Bis-(4-hydroxyphenyl)-propan, 2,2-Bis-(3,5-dibrom-4-hydroxyphenyl)-propan, 2,2-Bis-(3,5-dichlor-4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC) sowie die Dihydroxyarylverbindungen der Formeln (I), (II) und/oder (III).

Diese und weitere geeignete Dihydroxyarylverbindungen sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff.; S.102 ff." sowie in "D.G. Legrand, J.T.

Bendler, Handbook of Polycarbonate Science and Technology, Marcel Dekker New York 2000, S. 72ff." beschrieben.

Im Fall der Homopolycarbonate ist nur eine Dihydroxyarylverbindung eingesetzt, im Fall der Copolycarbonate sind mehrere Dihydroxyarylverbindungen eingesetzt.

Dihydroxyarylverbindungen sind allgemein bekannt oder lassen sich nach allgemein bekannten Verfahren herstellen (z.B. WO 2006/072344, EP-A 1609818 und darin zitierte Literatur). Bevorzugte Diphenole der Formel (1) sind: 2,2-Bis-(4-hydroxyphenyl)-propan (BPA), Bis-(4-hydroxyphenyl)-3,3,5-trimethyl-cyclohexan und 4,4'-Dihydroxydiphenyl.

Es können sowohl eine Dihydroxyarylverbindung unter Bildung von Homopolycarbonaten als auch verschiedene Dihydroxyarylverbindungen unter Bildung von Copolycarbonaten verwendet werden. Letzteres ist insbesondere dann von Bedeutung, wenn Produkte mit besonderen Eigenschaftskombinationen hergestellt werden sollen.

Anstelle der monomeren Dihydroxyarylverbindungen können auch niedermolekulare, überwiegend OH-endgruppengestoppte Oligocarbonate als Ausgangsverbindung eingesetzt werden.

Die Dihydroxyarylverbindungen können auch mit Restgehalten der Monohydroxyarylverbindungen, aus denen sie hergestellt wurden bzw. die niedermolekularen Oligocarbonate mit Restgehalten der Monohydroxyarylverbindungen, die bei der Herstellung der Oligomeren abgespalten wurden, eingesetzt werden. Die Restgehalte der Monohydroxyarylverbindungen können bis zu 20 Gew.-%, vorzugsweise 10 Gew.-%, besonders bevorzugt bis 5 Gew.-% und ganz besonders bevorzugt bis zu 2 Gew.-% betragen (s. z.B. EP 1 240 232 A1).

Die verwendeten Dihydroxyarylverbindungen, wie auch alle anderen der Synthese zugesetzten Rohstoffe, Chemikalien und Hilfsstoffe können mit den aus ihrer eigenen Synthese, Handhabung und Lagerung stammenden Verunreinigungen kontaminiert sein, obwohl es wünschenswert und Ziel ist, mit möglichst sauberen Rohstoffen, Chemikalien und Hilfsstoffen zu arbeiten.

Die für die Umsetzung mit den Dihydroxyarylverbindungen geeigneten Diarylcarbonate sind solche obiger Formel (1). Solche Diarylcarbonate sind beispielsweise in EP-A 1 609 818 A2 beschrieben. Bevorzugte Diarylverbindungen sind Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat und Di-[4-(1-methyl-1-phenylethyl)-phenyl]-carbonat. Besonders bevorzugt ist Diphenylcarbonat.

Die Diarylcarbonate können auch mit Restgehalten der Monohydroxyarylverbindungen, aus denen sie hergestellt wurden, eingesetzt werden. Die Restgehalte der Monohydroxyarylverbindungen können bis zu 20 Gew.-%, vorzugsweise 10 Gew.-%, besonders bevorzugt bis 5 Gew.-% und ganz besonders bevorzugt bis zu 2 Gew.-% betragen.

Bezogen auf die Dihydroxyarylverbindung werden die Diarylcarbonate im Allgemeinen mit 1,02 bis 1,30 Mol, bevorzugt mit 1,04 bis 1,25 Mol, besonders bevorzugt mit 1,06 bis 1,22 Mol, ganz besonders bevorzugt mit 1,06 bis 1,20, pro Mol Dihydroxyarylverbindung eingesetzt. Es können auch Mischungen der oben genannten Diarylcarbonate eingesetzt werden.

Zur Steuerung bzw. Veränderung der Endgruppen kann zusätzlich eine Monohydroxyarylverbindung eingesetzt werden, die nicht zur Herstellung des verwendeten Diarylcarbonats benutzt wurde. Sie wird durch folgende allgemeine Formel (3) dargestellt: 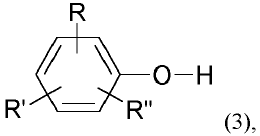 wobei R, R' und R" die bei Formel (1a) für R1 und R2 genannte Bedeutung haben. Bevorzugt ist Phenol, d. h. alle Reste in (3) stehen für H.

Dabei ist eine Monohydroxyarylverbindung zu wählen, deren Siedepunkt über dem der Monohydroxyarylverbindung liegt, die zur Herstellung des verwendeten Diarylcarbonates eingesetzt wurde. Die Monohydroxyarylverbindung kann zu jedem Zeitpunkt im Reaktionsverlauf zugegeben werden. Sie wird bevorzugt zu Beginn der Reaktion zugegeben oder aber auch an beliebiger Stelle im Verfahrensverlauf. Der Anteil an freier Monohydroxyarylverbindung kann 0,2 - 20 Mol %, bevorzugt 0,4 - 10 Mol %, bezogen auf die Dihydroxyarylverbindung, betragen.

Die Endgruppen können auch durch Mitverwendung eines Diarylcarbonates, dessen Basis-Monohydroxyarylverbindung einen höheren Siedepunkt hat als die Basis-Monohydroxyarylverbindung des hauptsächlich eingesetzten Diarylcarbonates, verändert werden. Auch hier kann das Diarylcarbonat zu jedem Zeitpunkt im Reaktionsverlauf zugegeben werden. Es wird bevorzugt zu Beginn der Reaktion zugegeben oder aber auch an beliebiger Stelle im Verfahrensverlauf. Der Anteil des Diarylcarbonates mit der höher siedenden Basis-Monohydroxyarylverbindung an der gesamt eingesetzten Diarylcarbonatmenge kann 1 - 40 Mol %, bevorzugt 1 - 20 Mol % und besonders bevorzugt 1 - 10 Mol %, betragen. Die Scheiben- oder Korbreaktoren zeichnen sich dadurch aus, dass sie bei hohen Verweilzeiten eine sehr große, sich ständig erneuernde Oberfläche am Vakuum bereitstellen. Die Scheiben- oder Korbreaktoren sind entsprechend den Schmelzviskositäten der Produkte geometrisch ausgebildet. Geeignet sind beispielsweise Reaktoren, wie sie in der DE 44 47 422 C2 und EP A 1 253 163, oder Zweiwellenreaktoren, wie sie in der WO A 99/28 370 beschrieben sind.

Zur Einarbeitung von Additiven wird die Komponente A bevorzugt in Form von Pulvern, Granulaten oder von Gemischen aus Pulvern und Granulaten eingesetzt.

### Komponente B

Die erfindungsgemäße Verwendung siehtden Einsatz von epoxidiertem Triacylglycerol als Komponente B vor. Es kann sich bei Komponente B um ein bestimmtes oder eine Mischung verschiedener Epoxygruppen-enthaltender ("epoxidierter") Triacylglycerole handeln. Bevorzugt handelt es sich um eine Mischung verschiedener Triacylglycerole. Bevorzugt enthält Komponente B eine Mischung von Triestern aus Glycerin mit Ölsäure, Linolsäure, Linolensäure, Palmitinsäure und/oder Stearinsäure. Weiter bevorzugt umfassen die Ester gemäß Komponente B nur Ester aus Glycerin mit den genannten Fettsäuren. Besonders bevorzugt wird Komponente B in Form von epoxidiertem Sojabohnenöl (B1) in die Zusammensetzungen eingebracht. Die CAS-Nummer von epoxidiertem Sojabohnenöl lautet 8013-07-8.

Die Epoxy-Gruppen in Komponente B können in dem Fachmann geläufigen Verfahren eingeführt werden. Solche sind insbesondere die Epoxidierung mit Peroxiden oder Persäuren, d.h. Ester von Glycerin mit Doppelbindungen enthaltenden Carbonsäuren werden mit Peroxiden oder Persäuren umgesetzt. Die C=C-Doppelbindungen in den Triacylglycerolen reagieren dabei teilweise oder vollständig zu Epoxidgruppen. Die Triacylglycerole sind also teilweise oder vollständig epoxidiert. Bevorzugt sind mindestens 90 %, weiter bevorzugt mindestens 95 %, noch weiter bevorzugt mindestens 98 % der aus den ungesättigten Carbonsäuren stammenden C=C-Doppelbindungen der Triacylglycerole epoxidiert. Bei Komponente B handelt es sich bevorzugt um eine Mischung verschiedener Verbindungen, wie sie z.B. durch den Einsatz von epoxidiertem Sojabohnenöl gegeben ist. Die OH-Zahlen dieser Mischungen liegen vorzugsweise zwischen 180 und 300 mg KOH/g (Methode 2011-0232602-92D der Currenta GmbH & Co. OHG, Leverkusen, entsprechend DIN EN ISO2554: 1998-10 mit Pyridin als Lösungsmittel). Die Säurezahlen dieser Mischungen liegen vorzugsweise unter 1 mg KOH/g, weiter bevorzugt sind sie ≤ 0,5 mg KOH/g, bestimmt mittels DIN EN ISO 2114:2006-11. Die Jodzahl der Mischungen nach Wijs beträgt vorzugsweise ≤ 5,0 g Jod/100 g, weiter bevorzugt ≤ 3,0 g Jod/100 g (Methode 2201-0152902-95D der Currenta GmbH & Co. OHG, Leverkusen). Die Oxiranzahl beträgt bevorzugt 5 bis 10 g Oz/100 g, besonders bevorzugt 6,3 bis 8,0 g Oz/100 g.

Die Polycarbonat-haltigen Zusammensetzungen enthalten 0,05 bis 10,0 Gew.-%, bevorzugt 0,1 bis 8,0 Gew.-%, weiter bevorzugt 0,2 bis 6,0 Gew.-%, noch weiter bevorzugt 0,2 bis 1,0 Gew.-%, besonders bevorzugt bis 0,8 Gew.-%, der Komponente B. "Bis" hier und an anderer Stelle schließt den jeweils genannten Grenzwert ein.

### Komponente C1

Als Komponente C1 können die transparenten thermoplastischen Zusammensetzungen Flammschutzmittel enthalten, insbesondere Alkali-, Erdalkali- und/oder Ammoniumsalze von aliphatischen bzw. aromatischen Sulfonsäure-, Sulfonamid- und Sulfonimidderivaten. Besonders bevorzugt umfassen die Zusammensetzungen als Flammschutzmittel ein oder mehrere Verbindungen, ausgewählt aus der Gruppe, bestehend aus Natrium- oder Kaliumperfluorbutansulfat, Natrium- oder Kaliumperfluormethansulfonat, Natrium- oder Kaliumperfluoroctansulfat, Natrium- oder Kalium-2,5-dichlorbenzolsulfat, Natrium- oder Kalium-2,4,5-trichlorbenzolsulfat, Natrium- oder Kaliumdiphenylsulfonsulfonat, Natrium- oder Kalium-2-formylbenzolsulfonat, Natrium- oder Kalium-(N-benzolsulfonyl)-benzolsulfonamid oder deren Mischungen.

Bevorzugt werden Natrium- oder Kaliumperfluorbutansulfat, Natrium- oder Kaliumperfluoroctansulfat, Natrium- oder Kaliumdiphenylsulfonsulfonat oder deren Mischungen eingesetzt. Ganz besonders bevorzugt ist Kaliumperfluor-1-butansulfonat, welches kommerziell erhältlich ist, unter anderem als Bayowet^{®} C4 von der Firma Lanxess, Leverkusen, Deutschland.

Die Mengen von Alkali-, Erdalkali- und/oder Ammoniumsalzen von aliphatischen bzw. aromatischen Sulfonsäure-, Sulfonamid- und Sulfonimidderivaten in der sich durch die erfindungsgemäße Verwendung ergebenden Zusammensetzung, sofern diese eingesetzt werden, betragen bevorzugt mindestens 0,01 Gew.-% und weiter bevorzugt bis zu 0,065 Gew.-%, da entsprechende Zusammensetzungen hier noch transparent sind.

### Komponente C2

Die transparenten thermoplastischen Zusammensetzungen können ein Entformungsmittel als Komponente C2 enthalten, bevorzugt in einer Menge bis 2,0 Gew.-%, weiter bevorzugt bis 1,0 Gew.-%, besonders bevorzugt bis 0,5 Gew.-%. "Bis (zu)" schließt erfindungsgemäß den jeweiligen Wert ein. Besonders bevorzugt enthalten die Zusammensetzungen Entformungsmittel auf Basis eines Fettsäureesters, bevorzugt eines Stearinsäureesters, insbesondere bevorzugt auf Pentaerythritbasis. Zusätzlich oder alternativ kann auch Glycerinmonostearat (GMS) eingesetzt werden.

### Komponente C3

Die Zusammensetzungen enthalten bevorzugt als Additiv mindestens einen UV-Absorber. Die UV-Absorber weisen eine möglichst geringe Transmission unterhalb 400 nm und eine möglichst hohe Transmission oberhalb von 400 nm auf. Für den Einsatz in der Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin^{®} 234, BASF SE, Ludwigshafen), 2-(2'-Hydroxy-5'-(tert.-octyl)-phenyl)-benzotriazol (Tinuvin^{®} 329, BASF SE, Ludwigshafen), Bis-(3-(2H-benztriazolyl)-2-hydroxy-5-tert.-octyl)methan (Tinuvin^{®} 360, BASF SE, Ludwigshafen), 2-(4,6-Diphenyl-1,3,5-triazin-2-yl)-5-(hexyloxy)-phenol (Tinuvin^{®} 1577, BASF SE, Ludwigshafen), sowie Benzophenone wie 2,4-Dihydroxybenzophenon (Chimasorb^{®} 22 , BASF SE, Ludwigshafen) und 2-Hydroxy-4-(octyloxy)-benzophenon (Chimassorb^{®} 81, BASF SE, Ludwigshafen), 2,2-Bis[[(2-cyano-1-oxo-3,3-diphenyl-2-propenyl)oxy]-methyl]-1,3-propandiylester (9CI) (Uvinul^{®} 3030, BASF SE, Ludwigshafen), 2-[2-Hydroxy-4-(2-ethylhexyl)oxy]phenyl-4,6-di(4-phenyl)phenyl-1,3,5-triazine (Tinuvin^{®} 1600, BASF SE, Ludwigshafen), Tetraethyl-2,2'-(1,4-phenylen-dimethyliden)-bismalonat (Hostavin^{®} B-Cap, Clariant AG) oder N-(2-Ethoxyphenyl)-N'-(2-ethylphenyl)-ethandiamid (Tinuvin^{®} 312, CAS-Nr. 23949-66-8, BASF SE, Ludwigshafen).

Besonders bevorzugte spezielle UV-Stabilisatoren sind Tinuvin^{®} 360, Tinuvin^{®} 329, Tinuvin^{®} 312, Tinuvin^{®} 326 und/oder Tinuvin^{®} 1600, ganz besonders bevorzugt sind Tinuvin^{®} 329, Tinuvin^{®} 326 und/oder Tinuvin^{®} 360.

Es können auch Mischungen der genannten Ultraviolett-Absorber eingesetzt werden.

Sofern UV-Absorber enthalten sind, enthält die sich durch die erfindungsgemäße Verwendung ergebende Zusammensetzung bevorzugt Ultraviolett-Absorber in einer Menge bis 1,0 Gew.-%, weiter bevorzugt bis 0,8 Gew.-%, besonders bevorzugt 0,05 Gew.-% bis 0,5 Gew.-%, ganz besonders bevorzugt 0,08 Gew.-% bis 0,4 Gew.-%, äußerst bevorzugt 0,1 Gew.-% bis 0,3 Gew.-%, bezogen auf die Gesamtzusammensetzung.

### Komponente D

Die sich durch die erfindungsgemäße Verwendung ergebenden Zusammensetzungen können Triisooctylphosphat als Umesterungsstabilisator enthalten. Triisooctylphosphat wird bevorzugt in Mengen von 0,003 Gew.-% bis 0,05 Gew.-%, weiter bevorzugt 0,004 Gew.-% bis 0,04 Gew.-% und besonders bevorzugt von 0,005 Gew.-% bis 0,03 Gew.-%, ganz besonders bevorzugt 0,007 bis 0,02 Gew.-%, bezogen auf die Gesamtzusammensetzung, eingesetzt.

### Komponente E

Zusätzlich sind optional sonstige übliche Additive ("weitere Additive"), vorzugsweise bis zu 10,0 Gew.-%, weiter bevorzugt 0,1 bis 6,0 Gew.-%, besonders bevorzugt 0,1 bis 3,0 Gew.-%, ganz besonders bevorzugt 0,2 bis 1,0 Gew.-%, insbesondere bis 0,5 Gew.-%, sonstige übliche Additive ("weitere Additive") enthalten. Die Gruppe der weiteren Additive umfasst keine Flammschutzmittel, keine Entformungsmittel, keine UV-Absorber und kein Triisooctylphosphat, da diese bereits als Komponenten C1, C2, C3 und D beschrieben sind. Es versteht sich, dass Komponente E auch kein Epoxy-Gruppen enthaltendes Triacylglycerol, auch kein epoxidiertes Sojabohnenöl umfasst, da dieses bereits als Komponente B beschrieben ist.

Solche Additive, wie sie üblicherweise bei Polycarbonaten zugesetzt werden, sind insbesondere Antioxidantien, Thermostabilisatoren, von Triisooctylphosphat verschiedene Umesterungsstabilisatoren, IR-Absorber, Antistatika, optische Aufheller, Farbmittel wie organische Pigmente, wie sie beispielsweise in EP-A 0 839 623, WO-A 96/15102, EP-A 0 500 496 oder "Plastics Additives Handbook", Hans Zweifel, 5th Edition 2000, Hanser Verlag, München beschrieben sind, in den für Polycarbonat üblichen Mengen. Diese Additive können einzeln oder auch im Gemisch zugesetzt werden. Generell sollten nur solche Additive verwendet werden, die mit der Polycarbonatmatrix kompatibel sind und nicht zu einer Trübung größer 2,0 % bei einer Schichtdicke von 4 mm führen.

Die Zusammensetzungen können auch andere Phosphate als Triisooctylphosphat oder Sulfonsäureester als Umesterungsstabilisatoren enthalten.

Die Zusammensetzungen enthalten bevorzugt keine Glasfasern und keine Carbonfasern.

Die Herstellung der Zusammensetzungen, enthaltend die Komponenten A und B sowie ggf. C1, C2, C3, D und/oder E, erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen aus Granulaten oder Granulaten und Pulvern mit den Komponenten B, ggf. C1, ggf. C2, ggf. C3 und ggf. D und E verwendet werden.

Es können auch Vormischungen verwendet werden, die aus Lösungen der Mischungskomponenten in geeigneten Lösungsmitteln hergestellt worden sind, wobei gegebenenfalls in Lösung homogenisiert wird und das Lösungsmittel anschließend entfernt wird.

Insbesondere können hierbei die Komponenten B bis E derZusammensetzung durch bekannte Verfahren oder als Masterbatch in das Polycarbonat eingebracht werden.

Die Verwendung von Masterbatchen ist zum Einbringen der Komponenten B bis E, einzeln oder in Mischung, bevorzugt.

In diesem Zusammenhang kann die Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann können die restlichen Ausgangsstoffe einzeln und/oder ebenfalls gemischt hinzugegeben werden.

Die Zusammenführung und Durchmischung einer Vormischung in der Schmelze kann auch in der Plastifiziereinheit einer Spritzgussmaschine erfolgen. Hierbei wird die Schmelze im anschließenden Schritt direkt in einen Formkörper überführt.

Die Zusammensetzungen können auf üblichen Maschinen, beispielsweise auf Extrudern oder Spritzgussmaschinen, zu beliebigen Formkörpern in üblicher Weise verarbeitet werden.

Die Herstellung der Formteile erfolgt vorzugsweise durch Spritzguss, Extrusion oder aus Lösung in einem Gießprozess.

Beispielsweise weisen die sich durch die erfindungsgemäße Verwendung ergebenden Zusammensetzungen wenigstens eine der nachfolgenden Eigenschaften auf
- einen Vicat VST/B50 nach ISO 306:2013 von ≥ 140,0°C bis ≤ 150°C,
- eine Transmission, bestimmt nach DIN EN ISO 13468-2:2006 bei einer Schichtdicke von 4 mm, von ≥ 86,0% bis 89,6% (Obergrenze inkludiert),
- eine Kerbschlagzähigkeit nach ISO7391/180A, 3mm, von ≥ 50 kJ/m² bis ≤ 75 kJ/m²,
- eine Einstufung im Brandtest UL94 (1,5 mm Wandstärke) von mindestens V2, sofern die Zusammensetzung Flammschutzmittel enthält.

Die eZusammensetzungen sind zur Herstellung von Mehrschichtsystemen geeignet. Hierbei wird die Polycarbonat-haltige Zusammensetzung in einer oder mehreren Schicht(en) auf einen geformten Gegenstand aus einem Kunststoff aufgebracht. Das Aufbringen kann zugleich mit oder unmittelbar nach der Formgebung des Formkörpers geschehen, zum Beispiel durch Hinterspritzen einer Folie, Coextrusion oder Mehrkomponentenspritzguss. Das Aufbringen kann aber auch auf den fertig geformten Grundkörper geschehen, z.B. durch Lamination mit einem Film, Umspritzen eines vorhandenen Formkörpers oder durch Beschichtung aus einer Lösung.

Die eZusammensetzungen sind zur Herstellung von Bauteilen im Automotive-Bereich, etwa für Blenden, Scheinwerferabdeckungen oder -rahmen, Linsen und Kollimatoren oder Lichtleiter sowie zur Herstellung von transparenten Rahmenbauteilen im EE (Elektro/Elektronik)- und IT-Bereich geeignet, insbesondere für Anwendungen, die hohe Anforderungen an die Fließfähigkeit stellen (Dünnschichtanwendungen). Solche Anwendungen sind beispielsweise 2K-Gehäuse, etwa für Ultrabooks, oder Rahmen/Rahmenteile für LED-Display-Technologien, z.B. OLED-Displays oder LCD-Displays oder auch für E-Ink-Geräte. Weitere Anwendungsfelder sind Gehäuseteile von mobilen Kommunikationsendgeräten, wie Smartphones, Tablets, Ultrabooks, Notebooks oder Laptops, aber auch Gehäuseteile für Navigationsgeräte, Smartwatches oder Herzfrequenzmesser, sowie für Elektroanwendungen in Dünnwand-Ausfertigungen, z. B. Haus- und Industrie-Vernetzungseinheiten und Smart-Meter-Gehäusebauteile.

Die Formteile, bestehend aus den Zusammensetzungen, einschließlich der Formteile, die eine Schicht eines Mehrschichtsystems bzw. ein Element eines oben genannten Bauteils darstellen, aus ("bestehend aus") diesen Zusammensetzungen, sind ebenfalls Gegenstand dieser Anmeldung.

Die Zusammensetzungen zeichnen sich insbesondere dadurch aus, dass sie aufgrund der Anwesenheit von Komponente B über ausgezeichnete rheologische und optische Eigenschaften verfügen. Sie eignen sich daher insbesondere für die Herstellung von anspruchsvollen Spritzgussteilen, besonders für Dünnwandanwendungen, bei denen eine gute Fließfähigkeit erforderlich ist. Beispiele für derartige Anwendungen sind Ultrabook-Gehäuseteile, Laptop-Cover, Scheinwerferabdeckungen, LED-Anwendungen oder Bauteile für E/E-Anwendungen. Dünnwandanwendungen sind bevorzugt solche Anwendungen, bei denen Wandstärken von weniger als 3 mm, weiter bevorzugt von weniger als 2,5 mm, noch weiter bevorzugt weniger als 2,0 mm, ganz besonders bevorzugt von weniger als 1,5 mm vorliegen. Wandstärke in diesem konkreten Fall ist definiert als Dicke der Wand lotrecht zur Fläche des Formteils mit der größten Ausdehnung, wobei über mindestens 60 %, bevorzugt über mindestens 75 %, weiter bevorzugt über mindestens 90 %, besonders bevorzugt über die gesamte Fläche die genannte Dicke vorliegt.

Gegenstand der Erfindung sind daher Formteile, umfassend die, bzw. bestehend aus den Zusammensetzungen, die Teil der genannten Anwendungselemente sind.

Die für die Zusammensetzungen vorstehend beschriebenen Ausführungsformen gelten - soweit anwendbar - auch für die erfindungsgemäße Verwendung.

Die nachfolgenden Beispiele sollen die Erfindung illustrieren, ohne sie jedoch einzuschränken.

### Beispiele

### 1. Beschreibung der Rohstoffe und Prüfmethoden

Die in den folgenden Beispielen beschriebenen Polycarbonat-basierten Zusammensetzungen wurden auf einem Extruder ZE 25 der Fa. Berstorff mit einem Durchsatz von 10 kg/h durch Compoundierung hergestellt. Die Schmelzetemperatur betrug 275 °C.

**Komponente A1:** Bisphenol A-basiertes Schmelzepolycarbonat mit einer Schmelze-Volumenfließrate MVR von 12 cm³/(10 min) (gemäß ISO 1133:2012-03, bei einer Prüftemperatur 300°C und 1,2 kg Belastung).

**Komponente A2:** Bisphenol A-basiertes Schmelzepolycarbonat in Pulverform mit einer Schmelze-Volumenfließrate MVR von 6 cm³/(10 min) (gemäß ISO 1133:2012-03, bei einer Prüftemperatur von 300°C und 1,2 kg Belastung).

**Komponente A3:** Bisphenol A-basiertes Schmelzepolycarbonat in Pulverform mit einer Schmelze-Volumenfließrate MVR von 14 cm³/(10 min) (gemäß ISO 1133:2012-03, bei einer Prüftemperatur von 300°C und 1,2 kg Belastung).

Die Polycarbonat-Pulver A2 und A3 dienten der besseren Einarbeitung der Additive.

**Komponente B:** Epoxidiertes Sojabohnenöl der Firma Faci, Italien, mit einer Säurezahl ≤ 0,5 mg KOH/g, bestimmt mittels DIN EN ISO 2114:2006-11, einem Oxiranwert (Epoxid-Sauerstoff ES, berechnet aus der Epoxid-Zahl EEW, gibt an wieviel Gramm Sauerstoff pro 100 g Öl enthalten sind; EEW bestimmt nach DIN 16945:1987-09) von ≥ 6,3 g Oz/100 g. Überwiegend vollständig epoxidierte Triacylglycerole, welche eine Mischung aus Triestern aus Glycerin mit Ölsäure, Linolsäure, Linolensäure, Palmitinsäure und/oder Stearinsäure sind.

**Komponente C1:** Kaliumperfluor-1-butansulfonat, kommerziell erhältlich als Bayowet^{®} C4 der Firma Lanxess AG, Leverkusen, Deutschland, CAS-Nr. 29420-49-3.

**Komponente C2:** Entformungsmittel PETS (Pentaerythrittetrastearat) der Firma Emery Oleochemicals.

**Komponente C3:** UV-Absorber Tinuvin 329 der Firma BASF SE.

**Komponente D:** Triisooctylphosphat der Firma Lanxess AG.

Die Bestimmung des **Schmelze-Volumenfließrate** (MVR) erfolgte nach ISO 1133:2012-03 (überwiegend bei einer Prüftemperatur von 300 °C, Masse 1,2 kg) mit dem Gerät Zwick 4106 der Firma Zwick Roell. Zusätzlich wurde der MVR-Wert nach 20 Minuten Vorwärmzeit gemessen (IMVR20'). Dies ist ein Maß für die Schmelzestabilität unter erhöhtem thermischem Stress.

Die Izod-Schlagzähigkeit wurde nach ISO 180:2019/1C (4 mm) bestimmt.

Die Izod-Kerbschlagzähigkeit wurde nach ISO 7391/ i.A. 180:2019 ISO 7391/180A (3 mm) bestimmt.

Die Bestimmung der **Lösungsviskosität** (eta rel) erfolgte nach ISO 1628-4:1999-03 mit einem Ubbelohde-Viskosimeter. Dazu wurden die Granulate gelöst und die Füllstoffe durch Filtration abgetrennt. Das Filtrat wurde eingeengt und getrocknet. Der erhaltene Film wurde zur Messung der Lösungsviskosität verwendet.

Der **Yellowness-Index** (Y.I.) wurde gemessen nach ASTM E313-10. Der Y.I. wurde nach D65,10° (Lichtart: D65/Beobachter: 10°) ausgewertet. Die vermessenen Proben hatten eine Geometrie von 60 mm × 40 mm × 4 mm.

Die **Transmission** Ty wurde bestimmt nach DIN EN ISO 13468-2:2006 bei einer Schichtdicke von 4 mm.

Die **Trübung** wurde bestimmt nach ASTM D1003:2013 bei einer Schichtdicke von 4 mm.

Die **Vicat-Erweichungstemperatur VST/B50** als Maß für die Wärmeformbeständigkeit wurde gemäß ISO 306:2013 an Prüfkörpern der Abmessung 80 mm × 10 mm × 4 mm mit einer Stempellast von 50 N und einer Aufheizgeschwindigkeit von 50°C/h mit dem Gerät Coesfeld Eco 2920 der Firma Coesfeld Materialtest bestimmt.

Es wurde außerdem die Brennbarkeit der untersuchten Proben beurteilt und klassifiziert, und zwar nach **UL94.** Dazu wurden Probenkörper der Abmessung 125 mm × 13 mm × 1,5 mm herstellt, wobei die Dicke d dabei der kleinsten Wandstärke in der vorgesehenen Anwendung entspricht. Eine V0-Klassifizierung bedeutet, dass die Flamme nach maximal 10 s von selbst erlischt. Ein brennendes Abtropfen tritt nicht auf. Ein Nachglimmen nach der zweiten Beflammung erfolgt für maximal 30 s.

### 2. Herstellung der Prüfkörper

Die in den folgenden Beispielen beschriebenen Polycarbonatzusammensetzungen wurden auf einem Extruder Evolum EV32HT der Firma Clextral-Frankreich mit einem Schneckendurchmesser von 32 mm durch Compoundierung hergestellt. Als Schneckenbesatz kam dabei L7-8,2 bei einem Durchsatz von 40-70 kg/h zum Einsatz. Die Drehzahl betrug 200-300 U/min bei einer Massetemperatur von 240-320 °C (je nach Zusammensetzung).

Das Granulat der aufgeführten Versuchsformulierungen wurde in einem Trockenlufttrockner der Firma Labotek, Typ DDM180 für 4 Stunden bei 80°C getrocknet.

### 3. Zusammensetzungen und Ergebnisse

**Tabelle 1: Schmelzepolycarbonat mit epoxidiertem Sojabohnenöl (ESBO)**

| **Rezeptur** | | **V1** | **2** | **3** | **4** | **5** | **6** |
|---|---|---|---|---|---|---|---|
| **A1** | Gew.-% | 93 | 93 | 93 | 93 | 93 | 93 |
| **A2** | Gew.-% | 7 | 6,9 | 6,8 | 6,6 | 6,4 | 6,2 |
| **B** | Gew.-% | - | 0,1 | 0,2 | 0,4 | 0,6 | 0,8 |

| **Prüfungen:** | | | | | | | |
|---|---|---|---|---|---|---|---|
| **ηᵣₑₗ Granulat** | | 1,277 | 1,277 | 1,276 | 1,276 | 1,276 | 1,274 |
| **MVR 7'/300 °C/1,2 kg** | ml/(10 min) | 12,0 | 12,5 | 12,5 | 12,8 | 14,6 | 15,4 |
| **Vicat VSTB 50** | | 146,1 | 144,8 | 145,1 | 142,9 | 141,8 | 140,4 |

| **Schmelzevisk. bei 280°C** | | | | | | | |
|---|---|---|---|---|---|---|---|
| **eta 50** | Pa s | 763 | 760 | 691 | 666 | 659 | 639 |
| **eta 100** | Pa·s | 722 | 707 | 681 | 652 | 622 | 617 |
| **eta 200** | Pa s | 667 | 651 | 626 | 607 | 575 | 570 |
| **eta 500** | Pa·s | 538 | 525 | 507 | 495 | 470 | 466 |
| **eta 1000** | Pa·s | 406 | 399 | 388 | 380 | 364 | 361 |
| **eta 1500** | Pa·s | 328 | 324 | 316 | 311 | 299 | 297 |
| **eta 5000** | Pa s | 150 | 148 | 146 | 144 | 139 | 139 |

| **Schmelzevisk. bei 300°C** | | | | | | | |
|---|---|---|---|---|---|---|---|
| **eta 50** | Pa s | 397 | 355 | 354 | 327 | 306 | 292 |
| **eta 100** | Pa s | 380 | 348 | 347 | 320 | 299 | 284 |
| **eta 200** | Pa s | 357 | 334 | 334 | 313 | 291 | 276 |
| **eta 500** | Pa·s | 307 | 291 | 292 | 275 | 258 | 245 |
| **eta 1000** | Pa s | 256 | 245 | 244 | 232 | 218 | 207 |
| **eta 1500** | Pa·s | 221 | 211 | 211 | 201 | 187 | 181 |
| **eta 5000** | Pa s | 117 | 111 | 111 | 106 | 102 | 100 |

| **Schmelzevisk. bei 320°C** | | | | | | | |
|---|---|---|---|---|---|---|---|
| **eta 50** | Pa·s | 222 | 211 | 203 | 165 | 141 | 129 |
| **eta 100** | Pa·s | 219 | 207 | 201 | 162 | 140 | 128 |
| **eta 200** | Pa s | 214 | 200 | 198 | 157 | 139 | 126 |
| **eta 500** | Pa s | 195 | 183 | 180 | 152 | 137 | 119 |
| **eta 1000** | Pa s | 170 | 161 | 159 | 137 | 122 | 108 |
| **eta 1500** | Pa s | 150 | 142 | 142 | 124 | 109 | 98 |
| **eta 5000** | Pa·s | 85 | 86 | 85 | 78 | 70 | 66 |

| **Kerbschlagzähigkeit** | | | | | | | |
|---|---|---|---|---|---|---|---|
| RT | kJ/m² | 65z | 64z | 66z | 65z | 66z | 66z |
| 10°C | kJ/m² | - | - | - | - | - | 64z |
| 0°C | kJ/m² | 61z | - | - | 61z | 61z | 8x59z |
| | | | | | | | 2x21s |
| -10°C | kJ/m² | 8x55z | - | 60z | 59z | 8x59z | 8x5 7z |
| | | 2x28s | | | | 1x21s | 2x23 s |
| -20°C | kJ/m² | 20s | 59z | 9x61z | 17s | 17s | 16s |
| | | | | 1x20s | | | |

| **Schlagzähigkeit** | | | | | | | |
|---|---|---|---|---|---|---|---|
| 23°C | kJ/m² | n.g. | n.g. | n.g. | n.g. | n.g. | n.g. |
| **Optik 4mm** | | | | | | | |
| **290°C** | | | | | | | |
| Transmission | % | 87,52 | 88,65 | 88,76 | 88,94 | 89,14 | 89,15 |
| Trübung | % | 0,70 | 0,44 | 0,51 | 0,45 | 0,34 | 0,30 |
| Y.I. | | 3,09 | 2,65 | 2,59 | 2,57 | 2,53 | 2,54 |

| **300°C** | | | | | | | |
|---|---|---|---|---|---|---|---|
| Transmission | % | 87,37 | 88,60 | 88,74 | 88,94 | 89,16 | 89,18 |
| Trübung | % | 0,64 | 0,44 | 0,41 | 0,45 | 0,35 | 0,36 |
| Y.I. | | 3,31 | 2,79 | 2,72 | 2,71 | 2,62 | 2,66 |

| **320°C** | | | | | | | |
|---|---|---|---|---|---|---|---|
| Transmission | % | 87,50 | 88,60 | 88,65 | 88,95 | 89,16 | 89,10 |
| Trübung | % | 0,60 | 0,43 | 0,41 | 0,46 | 0,36 | 0,40 |
| Y.I. | | 3,26 | 2,84 | 2,78 | 2,52 | 2,62 | 2,84 |

| **Thermoalterung bei 120°C** | | | | | | | |
|---|---|---|---|---|---|---|---|
| **Ausgang** | | | | | | | |
| Transmission | % | 87,52 | 88,65 | 88,76 | 88,94 | 89,14 | 89,15 |
| Trübung | % | 0,70 | 0,44 | 0,51 | 0,45 | 0,34 | 0,30 |
| Y.I. | | 3,09 | 2,65 | 2,59 | 2,57 | 2,53 | 2,54 |

| **500h** | | | | | | | |
|---|---|---|---|---|---|---|---|
| Transmission | % | 87,36 | 88,52 | 88,57 | 88,51 | 88,98 | 88,97 |
| Trübung | % | 0,67 | 0,47 | 0,46 | 0,56 | 0,37 | 0,39 |
| Y.I. | | 3,72 | 3,4 | 3,51 | 3,96 | 3,84 | 4,17 |

| **1000h** | | | | | | | |
|---|---|---|---|---|---|---|---|
| Transmission | % | 87,02 | 88,14 | 88 | 88,11 | 88,47 | 88,37 |
| Trübung | % | 0,63 | 0,46 | 0,41 | 0,49 | 0,5 | 0,4 |
| Y.I. | | 5,34 | 5,02 | 5,35 | 6,26 | 6,08 | 6,88 |

| | | | | | | | |
|---|---|---|---|---|---|---|---|
| n.g. = nicht gebrochen | | | | | | | |

Durch die Zugabe von ESBO wird die optische Transmission der Compounds erhöht. Gleichzeitig wird in den meisten Fällen der Yellowness Index (YI) reduziert. Höhere Konzentrationen an ESBO können zu einem etwas höheren YI führen.

Die Zähigkeiten bleiben auf hohem Niveau erhalten. Die Schmelzviskositäten werden gleichzeitig reduziert, was sich positiv auf die Verarbeitung im Spritzguss auswirkt.

**Tabelle 2: Schmelzepolycarbonat mit epoxidiertem Sojabohnenöl (ESBO) und Flammschutzmittel**

| **Rezeptur** | | **V7** | **8** | **9** | **10** | **11** | **12** |
|---|---|---|---|---|---|---|---|
| **A1** | Gew.-% | 93 | 93 | 93 | 93 | 93 | 93 |
| **A2** | Gew.-% | 6,935 | 6,835 | 6,735 | 6,535 | 6,335 | 6,135 |
| **B** | Gew.-% | - | 0,1 | 0,2 | 0,4 | 0,6 | 0,8 |
| **C1** | Gew.-% | 0,065 | 0,065 | 0,065 | 0,065 | 0,065 | 0,065 |

| **Prüfungen:** | | | | | | | |
|---|---|---|---|---|---|---|---|
| **ηᵣₑₗ Granulat** | | 1,276 | 1,275 | 1,275 | 1,275 | 1,274 | 1,273 |
| **MVR 7'/300 °C/1,2 Kg** | ml/(10 min) | 11,8 | 12,5 | 13,4 | 14,5 | 16,2 | 17,3 |
| **Vicat VSTB 50** | | 145,3 | 144,5 | 144,0 | 142,5 | 140,5 | 141,3 |

| **Schmelzevisk. bei 280°C** | | | | | | | |
|---|---|---|---|---|---|---|---|
| **eta 50** | Pa s | 729 | 617 | 410 | 531 | 500 | 473 |
| **eta 100** | Pa s | 646 | 595 | 407 | 515 | 496 | 468 |
| **eta 200** | Pa s | 598 | 556 | 384 | 488 | 475 | 438 |
| **eta 500** | Pa s | 491 | 462 | 340 | 414 | 405 | 376 |
| **eta 1000** | Pa s | 381 | 363 | 274 | 332 | 325 | 306 |
| **eta 1500** | Pa·s | 313 | 301 | 212 | 276 | 270 | 256 |
| **eta 5000** | Pa s | 146 | 142 | 110 | 135 | 133 | 127 |

| **Schmelzevisk. bei 300°C** | | | | | | | |
|---|---|---|---|---|---|---|---|
| **eta 50** | Pa s | 343 | 339 | 315 | 250 | 207 | 186 |
| **eta 100** | Pa·s | 328 | 324 | 302 | 245 | 201 | 184 |
| **eta 200** | Pa s | 308 | 300 | 282 | 233 | 203 | 184 |
| **eta 500** | Pa s | 280 | 274 | 256 | 218 | 191 | 173 |
| **eta 1000** | Pa·s | 238 | 232 | 209 | 187 | 170 | 154 |
| **eta 1500** | Pa·s | 209 | 201 | 193 | 171 | 156 | 138 |
| **eta 5000** | Pa s | 115 | 99 | 107 | 99 | 93 | 88 |

| **Schmelzevisk. bei 320°C** | | | | | | | |
|---|---|---|---|---|---|---|---|
| **eta 50** | Pa s | 184 | 170 | 167 | 102 | 107 | 78 |
| **eta 100** | Pa s | 184 | 170 | 155 | 98 | 105 | 76 |
| **eta 200** | Pa s | 172 | 165 | 147 | 95 | 102 | 74 |
| **eta 500** | Pa s | 158 | 154 | 139 | 93 | 100 | 73 |
| **eta 1000** | Pa·s | 145 | 137 | 126 | 88 | 96 | 70 |
| **eta 1500** | Pa·s | 137 | 124 | 115 | 84 | 90 | 68 |
| **eta 5000** | Pa·s | 85 | 81 | 59 | 60 | 70 | 60 |

| **Kerbschlagzähigkeit** | | | | | | | |
|---|---|---|---|---|---|---|---|
| RT | kJ/m² | 70z | 69z | 69z | 69z | 65z | 67z |
| 0°C | kJ/m² | 63z | 64z | 63z | 64z | 62z | 62z |
| -10°C | kJ/m² | 60z | 62z | 7x61z | 7x60z | 17s | 16s |
| | | | | 3x34s | 3×21s | | |
| -20°C | kJ/m² | 19s | 19s | 18s | 17s | 21s | 18s |

| **Optik 4 mm** | | | | | | | |
|---|---|---|---|---|---|---|---|
| **300°C** | | | | | | | |
| Transmission | % | 88,63 | 89,01 | 89,05 | 89,08 | 89,17 | 89,17 |
| Trübung | % | 1,55 | 0,47 | 0,32 | 0,30 | 0,36 | 0,35 |
| Y.I. | | 2,78 | 2,68 | 2,65 | 2,65 | 2,75 | 2,84 |

| **UL94V in 1,5 mm** | | | | | | | |
|---|---|---|---|---|---|---|---|
| ( 48h 23°C ) | | V2 | V2 | V2 | V2 | V2 | V2 |
| Einzelbew. V0/V1/V2/Vn.b. | | 3/-/2/- | -/-/5/- | -/-/5/- | 1/-/4/- | -/-/5/- | 2/-/3/- |
| Nachbrennzeit | | 43 | 43 | 37 | 36 | 29 | 38 |
| Nachbrennzeit ( 1. Brennsatz ) | s | - | - | - | - | - | - |
| ( 7d 70°C) | s | V0 | V2 | V2 | V2 | V2 | V2 |
| Einzelbew. V0/V1/V2/Vn.b. | | 5/-/-/- | 1/2/2/- | 1/-/4/- | 3/-/2/- | 3/-/2/- | 3/-/2/- |
| Nachbrennzeit | | 47 | 62 | 53 | 68 | 55 | 44 |
| Nachbrennzeit ( 1. Brennsatz ) | s | - | - | - | - | - | - |
| Gesamtbewertung | s | V2 | V2 | V2 | V2 | V2 | V2 |

Durch die Zugabe von ESBO wird die optische Transmission der Compounds erhöht. Die Compounds sind trotz Flammschutzmittel transparent. Gleichzeitig wird der Yellowness Index (YI) reduziert. Erst bei höheren Konzentrationen an ESBO kommt es zu einem etwas höheren YI.

Die Zähigkeiten sowie das Flammschutzverhalten bleiben auf hohem Niveau erhalten, die Schmelzviskositäten werden zusätzlich reduziert, was sich positiv auf die Verarbeitung im Spritzguss auswirkt.

**Tabelle 3: Schmelzepolycarbonat mit ESBO und UV-Schutz-Additiv**

| **Rezeptur** | | | **V13** | | | | **14** | | | |
|---|---|---|---|---|---|---|---|---|---|---|
| **A1** | | Gew.-% | 93,00 | | | | 93,00 | | | |
| **A3** | | Gew.-% | 6,34 | | | | 6,24 | | | |
| **B** | | Gew.-% | | | | | 0,10 | | | |
| **C2** | | Gew.-% | 0,40 | | | | 0,40 | | | |
| **C3** | | Gew.-% | 0,25 | | | | 0,25 | | | |
| **D** | | Gew.-% | 0,01 | | | | 0,01 | | | |

| **Prüfung** | **Bedingung** | **Norm/Einheit** | | | | | | | | |
|---|---|---|---|---|---|---|---|---|---|---|
| **ηᵣₑₗ Granulat** | | | 1,270 | | | | 1,270 | | | |
| **MVR** | 300 °C; 1,20 kg; 7 min | cm³/[10min] | 14,8 | | | | 14,3 | | | |
| **Vicat VST B50** | | °C | 140,3 | | | | 140,1 | | | |

| **Optische Daten** | | | | | | | | | | |
|---|---|---|---|---|---|---|---|---|---|---|
| **Transmissionsmessung** | Hunter UltraScanPRO, diffus/8°; D65; 10° | | | | | | | | | |
| Probendicke | | mm | **1** | **2** | **3** | **4** | **1** | **2** | **3** | **4** |
| **Transmission** | | [%] | 89,38 | 88,92 | 88,36 | 87,73 | 89,32 | 89,18 | 88,78 | 88,32 |
| **Y.I.** | | | 1,42 | 1,97 | 2,65 | 3,37 | 1,44 | 1,86 | 2,44 | 3,01 |
| **Trübung** | | [%] | 0,89 | 0,8 | 1,01 | 1,35 | 0,72 | 0,58 | 0,72 | 0,92 |

**Fortsetzung Tabelle 3: Schmelzepolycarbonat mit ESBO und UV-Schutz-Additiv**

| **Rezeptur** | | | **15** | | | | **16** | | | |
|---|---|---|---|---|---|---|---|---|---|---|
| **A1** | | Gew.-% | 93,00 | | | | 93,00 | | | |
| **A3** | | Gew.-% | 6,14 | | | | 5,94 | | | |
| **B** | | Gew.-% | 0,20 | | | | 0,40 | | | |
| **C2** | | Gew.-% | 0,40 | | | | 0,40 | | | |
| **C3** | | Gew.-% | 0,25 | | | | 0,25 | | | |
| **D** | | Gew.-% | 0,01 | | | | 0,01 | | | |

| **Prüfung** | **Bedingung** | **Norm/Einheit** | | | | | | | | |
|---|---|---|---|---|---|---|---|---|---|---|
| **ηᵣₑₗ Granulat** | | | 1,271 | | | | 1,270 | | | |
| **MVR** | 300 °C; 1,20 kg; 7 min | cm³/[10min] | 15,3 | | | | 15,5 | | | |
| **Vicat VST B50** | | °C | 139,2 | | | | 138,7 | | | |

| **Optische Daten** | | | | | | | | | | |
|---|---|---|---|---|---|---|---|---|---|---|
| **Transmissionsmessung** | Hunter UltraScanPRO, diffus/8°; D65; 10° | | | | | | | | | |
| **Probendicke** | | **mm** | **1** | **2** | **3** | **4** | **1** | **2** | **3** | **4** |
| **Transmission** | | [%] | 89,61 | 89,3 | 88,94 | 88,54 | 89,46 | 89,3 | 88,96 | 88,55 |
| **Y.I.** | | | 1,25 | 1,76 | 2,32 | 2,86 | 1,34 | 1,74 | 2,3 | 2,85 |
| **Trübung** | | [%] | 0,63 | 0,46 | 0,64 | 0,74 | 0,61 | 0,43 | 0,64 | 0,71 |

Durch die Zugabe von ESBO wird die optische Transmission der Compounds erhöht. Gleichzeitig wird der Yellowness Index (Y.I.) reduziert.

**Tabelle 4: Schmelzepolycarbonat mit ESBO, UV-Schutz Additiv und Flammschutzmittel**

| **Rezeptur** | | | **V17** | **18** | **19** | **20** |
|---|---|---|---|---|---|---|
| **A1** | Gew.-% | | 93,00 | 93,00 | 93,00 | 93,00 |
| **A3** | Gew.-% | | 6,21 | 6,11 | 6,01 | 5,81 |
| **B** | Gew.-% | | | 0,10 | 0,20 | 0,40 |
| **C2** | Gew.-% | | 0,40 | 0,40 | 0,40 | 0,40 |
| **C3** | Gew.-% | | 0,25 | 0,25 | 0,25 | 0,25 |
| **C1** | Gew.-% | | 0,13 | 0,13 | 0,13 | 0,13 |
| **D** | Gew.-% | | 0,01 | 0,01 | 0,01 | 0,010 |
| | | | | | | |

| **Prüfung** | **Bedingung** | **Einheit** | | | | |
|---|---|---|---|---|---|---|
| **ηᵣₑₗ Granulat** | | | 1,271 | 1,272 | 1,270 | 1,271 |
| MVR | 300 °C; 1,20 kg; 7 min | cm³/(10 min) | 14,4 | 15,1 | 15,9 | 15,4 |
| Vicat VSTB50 | | °C | 140,1 | 139,4 | 138,1 | 137,2 |
| **UL94-V** | 3,00 mm | | | | | |
| Bewertungsstufe | | | V-0 | V-0 | V-0 | V-0 |

**Tabelle 5: Schmelzepolycarbonat mit ESBO, UV-Schutz-Additiv und Flammschutzmittel (Fortsetzung)**

| **Rezeptur** | | | **V21** | | | | **22** | | | | **23** | | | | **24** | | | |
|---|---|---|---|---|---|---|---|---|---|---|---|---|---|---|---|---|---|---|
| **A1** | Gew.-% | | 93,00 | | | | 93,00 | | | | 93,00 | | | | 93,000000 | | | |
| **A3** | Gew.-% | | 6,275 | | | | 6,175 | | | | 6,075 | | | | 5,875000 | | | |
| **B** | Gew.-% | | | | | | 0,10 | | | | 0,20 | | | | 0,40 | | | |
| **C2** | Gew.-% | | 0,40 | | | | 0,40 | | | | 0,40 | | | | 0,40 | | | |
| **C3** | Gew.-% | | 0,25 | | | | 0,25 | | | | 0,25 | | | | 0,25 | | | |
| **C1** | Gew.-% | | 0,065 | | | | 0,065 | | | | 0,065 | | | | 0,065 | | | |
| **D** | Gew.-% | | 0,01 | | | | 0,010 | | | | 0,01 | | | | 0,01 | | | |
| | | | | | | | | | | | | | | | | | | |

| **Prüfung** | | **Einheit** | | | | | | | | | | | | | | | | |
|---|---|---|---|---|---|---|---|---|---|---|---|---|---|---|---|---|---|---|
| **ηᵣₑₗ Granulat** | | | 1,272 | | | | 1,273 | | | | 1,273 | | | | 1,272 | | | |
| | | | | | | | | | | | | | | | | | | |
| MVR | 300 °C; 1,20 kg; 7 min | cm³/(10 min) | 14,8 | | | | 14,7 | | | | 15,3 | | | | 15,9 | | | |
| MVR | 300 °C; 1,20 kg; 20 min | cm³/(10 min) | 15,6 | | | | 16 | | | | 16,8 | | | | 18,2 | | | |
| Delta MVR/IMVR20' | | | 0,8 | | | | 1,3 | | | | 1,5 | | | | 2,3 | | | |
| Vicat VSTB50 | | °C | 142,3 | | | | 141,6 | | | | 140,6 | | | | 139,4 | | | |

| **Brand** | | | | | | | | | | | | | | | | | | |
|---|---|---|---|---|---|---|---|---|---|---|---|---|---|---|---|---|---|---|
| **UL94-V** | 3,00 mm | | | | | | | | | | | | | | | | | |
| Bewertungsstufe | | | V-2 | | | | V-2 | | | | V-2 | | | | V-2 | | | |

| **Optische Daten** | | | | | | | | | | | | | | | | | | |
|---|---|---|---|---|---|---|---|---|---|---|---|---|---|---|---|---|---|---|
| **Transmissionsmessung** | Hunter Ultra-ScanPRO, diffus/8°; D65; 10° | | | | | | | | | | | | | | | | | |

| **Probendicke** | | **mm** | **1** | **2** | **3** | **4** | **1** | **2** | **3** | **4** | **1** | **2** | **3** | **4** | **1** | **2** | **3** | **4** |
|---|---|---|---|---|---|---|---|---|---|---|---|---|---|---|---|---|---|---|
| Transmission | [%] | | 89,4 | 88,8 | 88,3 | 87,8 | 89,5 | 89,1 | 88,6 | 88,2 | 89,5 | 89,2 | 88,7 | 88,2 | 89,6 | 89,3 | 89,0 | 88,6 |
| Y.I. | | | 1,21 | 1,63 | 2,12 | 2,62 | 1,11 | 1,56 | 2,04 | 2,47 | 1,16 | 1,54 | 2,01 | 2,43 | 1,11 | 1,56 | 2,02 | 2,45 |
| Trübung | [%] | | 0,73 | 0,88 | 1,44 | 1,59 | 0,66 | 0,74 | 1,17 | 1,21 | 0,62 | 0,76 | 1,08 | 1,42 | 0,56 | 0,69 | 0,88 | 1,19 |

| | | | | | | | | | | | | | | | | | | |
|---|---|---|---|---|---|---|---|---|---|---|---|---|---|---|---|---|---|---|
| V"X": Vergleichsversuch "X" | | | | | | | | | | | | | | | | | | |

Aus Tabelle 4 und Tabelle 5 ist zu erkennen, dass bei Anwesenheit von Komponente B die optischen Eigenschaften bei Einsatz eines Flammschutzmittels, hier C1, nicht negativ beeinflusst werden.

## Patentansprüche

1. Verwendung von epoxidiertem Triacylglycerol zur Erhöhung der Transmission, bestimmt nach DIN EN ISO 13468-2:2006 bei einer Schichtdicke von 4 mm, einer transparenten thermoplastischen Zusammensetzung auf Basis von aromatischem Schmelzepolycarbonat.

2. Verwendung nach Anspruch 1, wobei das epoxidierte Triacyglycerol epoxidiertes Sojabohnenöl ist.

3. Verwendung nach Anspruch 1 oder 2, wobei die transparente thermoplastische Zusammensetzung nach Zusatz des epoxidierten Triacylglycerols folgende Komponenten enthält:
A) 50,0 Gew.-% bis 99,95 Gew.-% aromatisches Schmelzepolycarbonat,
B) 0,05 Gew.-% bis 10,0 Gew.-% epoxidiertes Triacylglycerol,
C1) 0 bis 0,5 Gew.-% mindestens eines Alkali-, Erdalkali- und/oder Ammoniumsalz eines aliphatischen oder aromatischen Sulfonsäure-, Sulfonamid- oder Sulfonimidderivates,
C2) 0 bis 2,0 Gew.-% eines Entformungsmittels,
C3) 0 bis 1,0 Gew.-% eines UV-Absorbers,
D) 0 bis 0,05 Gew.-% Triisooctylphosphat und
E) ggf. von den Komponenten B, C1, C2, C3 und D verschiedene, weitere Additive,
wobei sich die Gew.-%-Angaben auf das Gesamtgewicht der Zusammensetzung beziehen.

4. Verwendung nach einem der vorhergehenden Ansprüche, wobei die transparente thermoplastische Zusammensetzung nach Zusatz des epoxidierten Triacylglycerols folgende Komponenten enthält:
A) 77,0 Gew.-% bis 99,9 Gew.-% aromatisches Schmelzepolycarbonat,
B) 0,1 bis 1,0 Gew.-% epoxidiertes Triacylglycerol,
C1) 0 bis 0,065 Gew.-% mindestens eines Alkali-, Erdalkali- und/oder Ammoniumsalz eines aliphatischen oder aromatischen Sulfonsäure-, Sulfonamid- oder Sulfonimidderivates,
C2) 0 bis 2,0 Gew.-% eines Entformungsmittels,
C3) 0 bis 1,0 Gew.-% eines UV-Absorbers,
D) 0 bis 0,05 Gew.-% Triisooctylphosphat und
E) ggf. von den Komponenten B, C1, C2, C3 und D verschiedene, weitere Additive enthält.

5. Verwendung nach einem der vorhergehenden Ansprüche, wobei die transparente thermoplastische Zusammensetzung mindestens 0,01 Gew.-% der Komponente C1 enthält.

6. Verwendung nach einem der vorhergehenden Ansprüche, wobei als Komponente C1 Kaliumperfluor-1-butansulfonat enthalten ist.

7. Verwendung nach einem der vorhergehenden Ansprüche, wobei die Menge an epoxidiertem Triacylglycerol in der Zusammensetzung ≤ 0,8 Gew.-% beträgt.

8. Verwendung nach einem der vorhergehenden Ansprüche, wobei als aromatisches Schmelzepolycarbonat in der transparenten thermoplastischen Zusammensetzung Bisphenol A-basiertes Polycarbonat enthalten ist.

9. Verwendung nach einem der vorhergehenden Ansprüche, wobei das epoxidierte Triacylglycerol eine Mischung von Triestern aus Glycerin mit Ölsäure, Linolsäure, Linolensäure, Palmitinsäure und/oder Stearinsäure enthält.

10. Verwendung nach einem der vorhergehenden Ansprüche, wobei mindestens 90 Gew.-% der C=C-Doppelbindungen aus den Carbonsäureanteilen der Triacylglycerole vollständig epoxidiert sind.

11. Verwendung nach einem der vorhergehenden Ansprüche, wobei die Komponente B durch die Zumischung von epoxidiertem Sojabohnenöl (CAS-Nummer 8013-07-8) in die thermoplastische Zusammensetzung gelangt.

12. Verwendung nach einem der vorhergehenden Ansprüche, wobei das aromatische Schmelzepolycarbonat eine oder mehreren Strukturen der allgemeinen Formeln (I) bis (IV) enthält 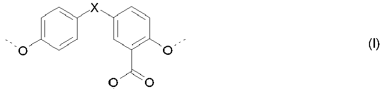 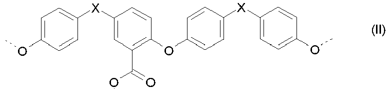 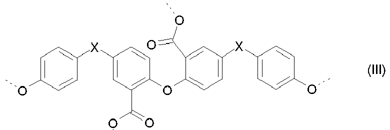 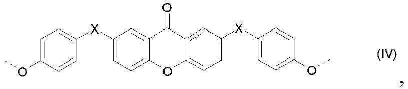 in denen die Phenylringe unabhängig voneinander ein- oder zweifach mit C₁- bis C₈-Alkyl, Halogen wie Chlor oder Brom substituiert sein können und X für eine Einfachbindung, C₁- bis C₆-Alkylen, C₂- bis C₅-Alkyliden oder C₅- bis C₆- Cycloalkyliden, welches mit C₁- bis C₆-Alkyl substituiert sein kann, steht, wobei die Menge der Struktureinheiten (I) bis (IV) in Summe 50 bis 900 ppm, bezogen auf das Gesamtgewicht des aromatischen Schmelzepolycarbonats, beträgt,
und das aromatische Schmelzepolycarbonat weiterhin enthält: in Summe lineare und cyclische Oligomere in einer Menge von 0,1 bis 2 Gew.-%, bezogen auf das Gesamtgewicht des aromatischen Schmelzepolycarbonats, wobei die
linearen Oligomere solche der Formeln (V) bis (VII) sind 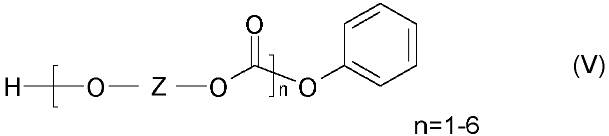 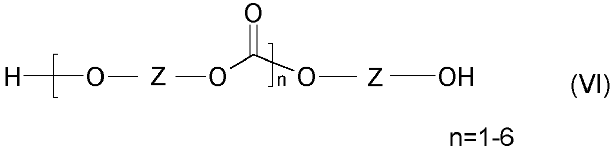 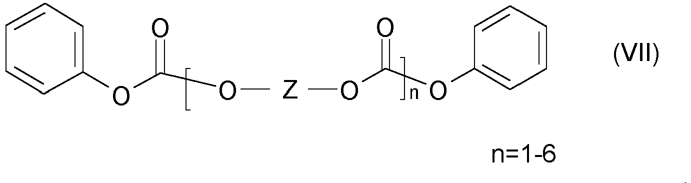
wobei die cyclischen Oligomere solche der allgemeinen Formel (VIII) sind 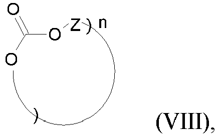 wobei
n eine ganze Zahl von 2 bis 6 ist und
Z für einen Rest der Formel (1a) 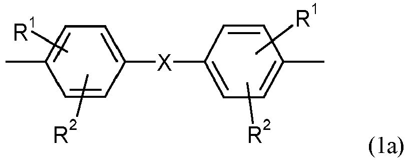
steht, in der
R¹ und R² unabhängig voneinander für H, C₁- bis C₈-Alkyl stehen und
X für eine Einfachbindung, C₁- bis C₆-Alkylen, C₂- bis Cs-Alkyliden oder C₅- bis C₆- Cycloalkyliden, welches mit C₁- bis C₆-Alkyl substituiert sein kann, steht.

13. Verwendung nach einem der vorhergehenden Ansprüche, wobei die Additive ausgewählt sind aus der Gruppe der Antioxidantien, Thermostabilisatoren, von Triisooctylphosphat verschiedene Umesterungsstabilisatoren, IR-Absorber, Antistatika, Farbmittel wie organische Pigmente und/oder Additive zur Lasermarkierung und wobei die Zusammensetzung keine weiteren Komponenten als die genannten enthält.

14. Verwendung nach einem der vorhergehenden Ansprüche, wobei die Zusammensetzung bis zu 0,065 Gew.-% Flammschutzmittel gemäß Komponente C1 enthält.

## Claims

1. Use of epoxidized triacylglycerol to increase the transmittance, determined according to DIN EN ISO 13468-2:2006 at a layer thickness of 4 mm, of a transparent thermoplastic composition based on aromatic melt polycarbonate.

2. Use according to Claim 1, wherein the epoxidized triacylglycerol is epoxidized soybean oil.

3. Use according to Claim 1 or 2, wherein after addition of the epoxidized triacylglycerol the transparent thermoplastic composition contains the following components:
A) 50.0% by weight to 99.95% by weight of aromatic melt polycarbonate,
B) 0.05% by weight to 10.0% by weight of epoxidized triacylglycerol,
C1) 0% to 0.5% by weight of at least one alkali metal, alkaline earth metal and/or ammonium salt of an aliphatic or aromatic sulfonic acid, sulfonamide or sulfonimide derivative,
C2) 0% to 2.0% by weight of a demolding agent,
C3) 0% to 1.0% by weight of a UV absorber,
D) 0% to 0.05% by weight of triisooctyl phosphate and
E) optionally further additives distinct from components B, C1, C2, C3 and D,
wherein the reported amounts in % by weight are based on the total weight of the composition.

4. Use according to any of the preceding claims, wherein after addition of the epoxidized triacylglycerol the transparent thermoplastic composition contains the following components:
A) 77.0% by weight to 99.9% by weight of aromatic melt polycarbonate,
B) 0.1% to 1.0% by weight of epoxidized triacylglycerol,
C1) 0% to 0.065% by weight of at least one alkali metal, alkaline earth metal and/or ammonium salt of an aliphatic or aromatic sulfonic acid, sulfonamide or sulfonimide derivative,
C2) 0% to 2.0% by weight of a demolding agent,
C3) 0% to 1.0% by weight of a UV absorber,
D) 0% to 0.05% by weight of triisooctyl phosphate and
E) optionally further additives distinct from components B, C1, C2, C3 and D.

5. Use according to any of the preceding claims, wherein the transparent thermoplastic composition contains at least 0.01% by weight of component C1.

6. Use according to any of the preceding claims, wherein potassium perfluoro-1-butanesulfonate is present as component C1.

7. Use according to any of the preceding claims, wherein the amount of epoxidized triacylglycerol in the composition is ≤ 0.8% by weight.

8. Use according to any of the preceding claims, wherein bisphenol A-based polycarbonate is present as the aromatic melt polycarbonate in the transparent thermoplastic composition.

9. Use according to any of the preceding claims, wherein the epoxidized triacylglycerol contains a mixture of triesters of glycerol with oleic acid, linoleic acid, linolenic acid, palmitic acid and/or stearic acid.

10. Use according to any of the preceding claims, wherein at least 90% by weight of the C=C double bonds from the carboxylic acid moieties of the triacylglycerols have been completely epoxidized.

11. Use according to any of the preceding claims, wherein component B is introduced into the thermoplastic composition through admixing of epoxidized soybean oil (CAS number 8013-07-8).

12. Use according to any of the preceding claims, wherein the aromatic melt polycarbonate contains one or more structures of general formulae (I) to (IV) 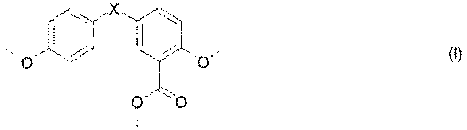 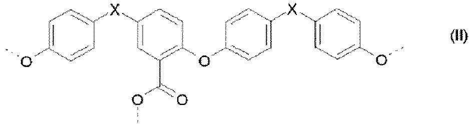 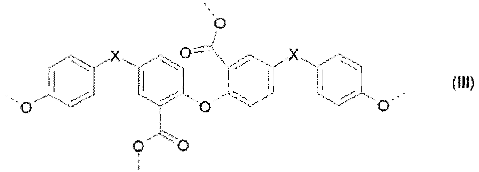 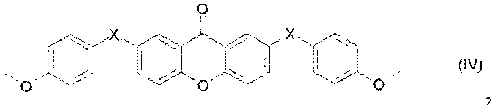 in which the phenyl rings may each independently be mono- or di-substituted with C₁- to C₈-alkyl, halogen such as chlorine or bromine, and X represents a single bond, C₁- to C₆-alkylene, C₂- to C₅-alkylidene or C₅- to C₆-cycloalkylidene, which may be substituted with C₁- to C₆-alkyl, wherein the amount of structural units (I) to (IV) sums to 50 to 900 ppm based on the total weight of the aromatic melt polycarbonate,
and the aromatic melt polycarbonate further contains: linear and cyclic oligomers in a total amount of 0.1% to 2% by weight based on the total weight of the aromatic melt polycarbonate, wherein the linear oligomers are those of formulae (V) to (VII) 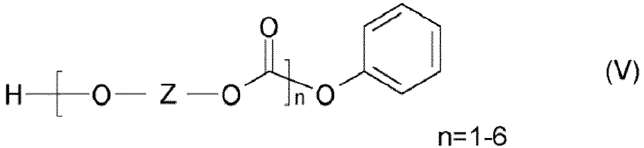 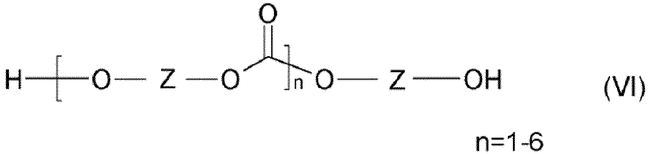 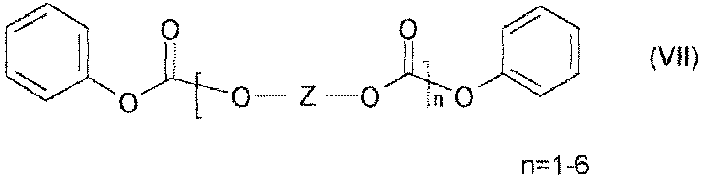 wherein the cyclic oligomers are those of general formula (VIII) 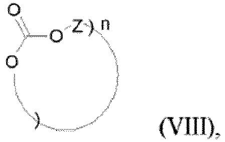 wherein
n is an integer from 2 to 6 and
Z is a radical of formula (1a) 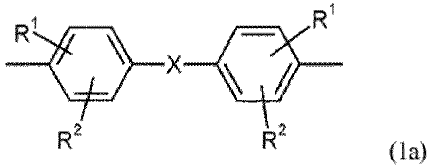
in which
R¹ and R² independently of one another represent H, C₁-to C₈-alkyl, and
X represents a single bond, C₁- to C₆-alkylene, C₂- to C₅-alkylidene or C₅- to C₆-cycloalkylidene which may be substituted with C₁- to C₆-alkyl.

13. Use according to any of the preceding claims, wherein the additives are selected from the group of antioxidants, heat stabilizers, transesterification stabilizers distinct from trisooctyl phosphate, IR absorbers, antistats, colorants such as organic pigments and/or additives for laser marking and wherein the composition contains no further components than those recited.

14. Use according to any of the preceding claims, wherein the composition contains up to 0.065% by weight of flame retardant of component C1.

## Revendications

1. Utilisation de triacylglycérol époxydé pour l'augmentation de la transmission, déterminée selon la norme DIN EN ISO 13468-2:2006 à une épaisseur de couche de 4 mm, d'une composition thermoplastique transparente à base de polycarbonate fusible aromatique.

2. Utilisation selon la revendication 1, le triacylglycérol époxydé étant de l'huile de germes de soja époxydée.

3. Utilisation selon la revendication 1 ou 2, la composition thermoplastique transparente contenant, après l'ajout du triacylglycérol époxydé, les composants suivants :
A) 50,0% en poids à 99,95% en poids de polycarbonate fusible aromatique,
B) 0,05% en poids à 10,0% en poids de triacylglycérol époxydé,
C1) 0 à 0,5% en poids d'au moins un sel de métal alcalin, alcalino-terreux et/ou d'ammonium d'un dérivé aliphatique ou aromatique d'acide sulfonique, de sulfonamide ou de sulfonimide,
C2) 0 à 2,0% en poids d'un agent de démoulage,
C3) 0 à 1,0% en poids d'un absorbant des UV,
D) 0 à 0,05% en poids de phosphate de triisooctyle et
E) le cas échéant d'autres additifs, différents des composants B, C1, C2, C3 et D,
les indications en % en poids se rapportant au poids total de la composition.

4. Utilisation selon l'une des revendications précédentes, la composition thermoplastique transparente contenant, après l'ajout du triacylglycérol époxydé, les composants suivants :
A) 77,0% en poids à 99,9% en poids de polycarbonate fusible aromatique,
B) 0,1 à 1,0% en poids de triacylglycérol époxydé,
C1) 0 à 0,065% en poids d'au moins un sel de métal alcalin, alcalino-terreux et/ou d'ammonium d'un dérivé aliphatique ou aromatique d'acide sulfonique, de sulfonamide ou de sulfonimide,
C2) 0 à 2,0% en poids d'un agent de démoulage,
C3) 0 à 1,0% en poids d'un absorbant des UV,
D) 0 à 0,05% en poids de phosphate de triisooctyle et
E) le cas échéant d'autres additifs, différents des composants B, C1, C2, C3 et D.

5. Utilisation selon l'une des revendications précédentes, la composition thermoplastique transparente contenant au moins 0,01% en poids du composant C1.

6. Utilisation selon l'une des revendications précédentes, du perfluoro-1-butanesulfonate de potassium étant contenu en tant que composant C1.

7. Utilisation selon l'une des revendications précédentes, la quantité de triacylglycérol époxydé dans la composition étant ≤ 0,8% en poids.

8. Utilisation selon l'une des revendications précédentes, du polycarbonate à base de bisphénol A étant contenu comme polycarbonate fusible aromatique dans la composition thermoplastique transparente.

9. Utilisation selon l'une des revendications précédentes, le triacylglycérol époxydé contenant un mélange de triesters de glycérol avec de l'acide oléique, linoléique, linolénique, palmitique et/ou stéarique.

10. Utilisation selon l'une des revendications précédentes, au moins 90% en poids des doubles liaisons C=C des proportions d'acide carboxylique des triacylglycérols étant complètement époxydés.

11. Utilisation selon l'une des revendications précédentes, le composant B arrivant dans la composition thermoplastique par le mélange d'huile de germes de soja époxydée (n° CAS 8013-07-8).

12. Utilisation selon l'une des revendications précédentes, le polycarbonate fusible aromatique contenant une ou plusieurs structures des formules générales (I) à (IV) 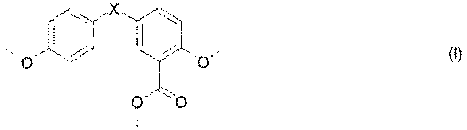 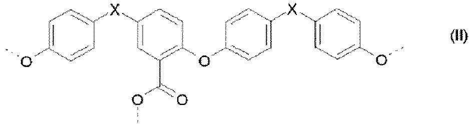 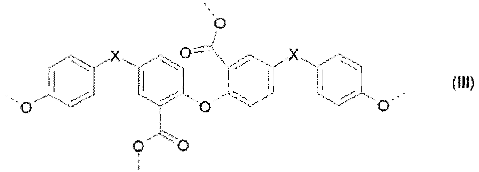 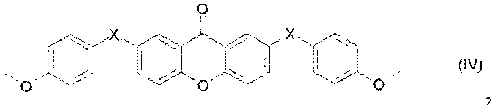
dans lesquelles les cycles phényle peuvent être monosubstitués ou disubstitués, indépendamment les uns des autres, par C₁-C₈-alkyle, halogène tel que chlore ou brome et X représente une simple liaison, C₁-C₆-alkylène, C₂-C₅-alkylidène ou C₅-C₆-cycloalkylidène, qui peut être substitué par C₁-C₆-alkyle, la somme des quantités des motifs structuraux (I) à (IV) valant 50 à 900 ppm, par rapport au poids total du polycarbonate fusible aromatique,
et le polycarbonate fusible aromatique contenant en outre : des oligomères linéaires et cycliques dont la somme des quantités représente 0,1 à 2% en poids, par rapport au poids total du polycarbonate fusible aromatique,
les oligomères linéaires étant des oligomères des formules (V) à (VII) 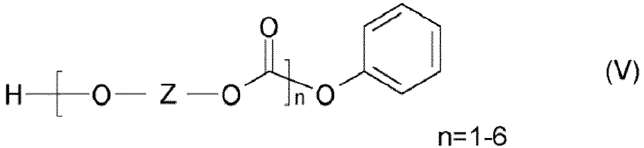 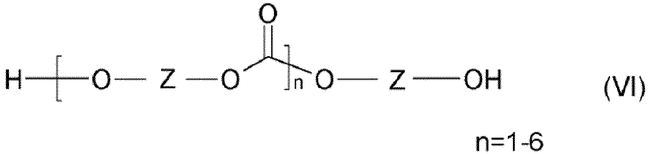 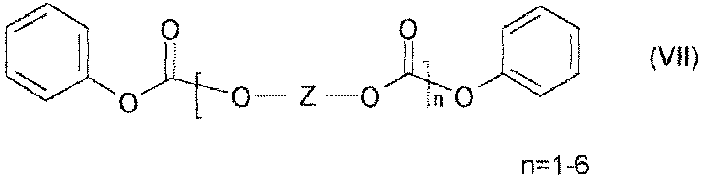
les oligomères cycliques étant des oligomères de formule générale (VIII) 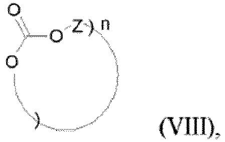
dans lesquelles
n représente un nombre entier de 2 à 6 et
Z représente un radical de formule (1a) 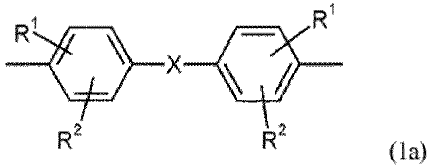
dans laquelle
R¹ et R² représentent, indépendamment l'un de l'autre, H, C₁-C₈-alkyle et
X représente une simple liaison, C₁-C₆-alkylène, C₂-C₅-alkylidène ou C₅-C₆-cycloalkylidène, qui peut être substitué par C₁-C₆-alkyle.

13. Utilisation selon l'une des revendications précédentes, les additifs étant choisis dans le groupe des antioxydants, thermostabilisants, stabilisants à la transestérification différents du phosphate de triisooctyle, absorbants des IR, antistatiques, colorants, tels que les pigments organiques et/ou additifs pour le marquage laser et la composition ne contenant pas d'autres composants que ceux mentionnés.

14. Utilisation selon l'une des revendications précédentes, la composition contenant jusqu'à 0,065% en poids d'agent ignifuge selon le composant C1.
